# EUROPÄISCHE PATENTSCHRIFT

(11) **EP 3 760 905 B1**
(45) Veröffentlichungstag und Bekanntmachung des Hinweises auf die Patenterteilung: **29.05.2024**
(21) Anmeldenummer: 20178011.1
(22) Anmeldetag: 03.06.2020
(51) Int. Cl.: F16L 11/08, F16L 11/127, F16L 57/06

(54) **SCHLAUCH MIT MEHREREN SENSORLEITUNGEN**
HOSE WITH MULTIPLE SENSOR LINES
TUYAU POURVU DE PLUSIEURS CONDUITS DE CAPTEUR

(30) Priorität: 02.07.2019 DE 102019209699
(43) Veröffentlichungstag der Anmeldung: 06.01.2021
(73) Patentinhaber: ContiTech Deutschland GmbH, 30175 Hannover (DE)
(72) Erfinder: Pagnanelli, Fabrizio - c/o Continental AG, 30419 Hannover (DE)
(74) Vertreter: Continental Corporation

(56) Entgegenhaltungen:
- DE-A1-102017 105 365
- DE-T2- 69 932 950
- US-A1- 2004 065 377

## Beschreibung

Die Erfindung betrifft einen Schlauch mit mehreren Sensorleitungen.

Aus dem Stand der Technik sind Schläuche grundsätzlich bekannt. Schläuche dienen zum Fördern von Flüssigkeiten. In die Flüssigkeiten können in Feststoffe oder Festkörper eingemischt sein. Diese Flüssigkeiten sollen weiterhin als Flüssigkeiten bezeichnet sein. In Kies- und Sandgruben wird oftmals Kies und/oder Sand mit Wasser vermischt, um die daraus entstehende Flüssigkeit mittels Schläuchen zu fördern. Nicht selten werden jedoch auch andere fluide Gemische als Flüssigkeit mit einem Schlauch gefördert. Beispielsweise können Schlamm und Schlick mittels eines Schlauchs gefördert werden. Bei Minen wird oftmals das aus dem Erdreich abgetragene Gestein mit Wasser vermischt, um die daraus entstehende Flüssigkeit mittels eines Schlauchs zu fördern.

Ein Schlauch weist eine rohrförmige Schlauchwand auf. Die Schlauchwand weist ein elastomeres Basismaterial auf, in das oftmals mindestens ein Festigkeitsträger eingebettet ist. Der Festigkeitsträger ist in Umfangsrichtung der rohrförmigen Schlauchwand ringförmig umlaufend oder spiralförmig gewendet ausgebildet. Ein entsprechender Umfangsradius oder Wendelradius des Festigkeitsträgers entspricht somit zumindest im Wesentlichen dem mittleren Durchmesser der rohrförmigen Schlauchwand. Der Festigkeitsträger dient zur Erhöhung der Festigkeit des Schlauchs in dessen Radialrichtung. Wird die Flüssigkeit mit einem hohen Druck durch den Schlauch gefördert, so kann der Festigkeitsträger dazu dienen, diesem Druck zerstörungsfrei standzuhalten. Die Schlauchwand eines Schlauchs erstreckt sich oftmals zwischen zwei Schlaukopplungsstücken. Die Schlauchkopplungsstücke können zumindest im Wesentlichen gleich ausgebildet sein. Mehrere Schläuche können derart hintereinander mittels der Schlauchkopplungsstücke gekoppelt werden, indem die Enden der Schläuche mittels der Kopplungsstücke lösbar verbunden werden. Durch die hintereinander verbundenen Schläuche kann ein Schlauchstrang entstehen, der sich über eine sehr große Länge erstrecken kann.

Der innere Durchmesser eines Schlauchs bzw. einer Schlauchwand kann grundsätzlich eine beliebige Größe aufweisen. Oftmals ist der innere Durchmesser eines Schlauchs jedoch im Bereich zwischen 5 cm und 3 m.

Wird mittels eines Schlauchs eine Flüssigkeit gefördert, in die Feststoffe oder Festkörper eingemischt sind, entsteht an der Innenseite der Schlauchwand eine Reibung zwischen den Feststoffen bzw. Festkörpern und dem elastomeren Basismaterial der Schlauchwand. Hierdurch wird die Schlauchwand an der Innenseite abgerieben. Dieser Abrieb an der Innenseite der Schlauchwand verringert die Festigkeit eines Schlauchs. Wird ein an der Innenseite durch Abrieb abgenutzter Schlauch nicht rechtzeitig gegen einen neuen Schlauch ausgetauscht, so besteht die Gefahr, dass die durch den Abrieb geschwächte Schlauchwand aufreißt. Der in einem solchen Fall entstehende Druckverlust der geförderten Flüssigkeit kann eine ungewollte Unterbrechung der Förderung der Flüssigkeit verursachen. Dies gilt insbesondere auch dann, wenn eine Vielzahl von Schläuchen miteinander verbunden ist, um einen Schlauchstrang zu bilden. Fällt einer dieser Schläuche aus, kommt die Förderung der Flüssigkeit durch den gesamten Schlauchstrang zum Erliegen. Derartige Ausfälle sind jedoch zu vermeiden.

Es ist deshalb wünschenswert, eine Abnutzung durch Abrieb oder Risse an der Mantelinnenseite einer Schlauchwand eines Schlauchs zu erfassen und rechtzeitig festzustellen, wenn die entsprechende Abnutzung an der Mantelinnenseite der Schlauchwand einen kritischen Wert erreicht, der den Austausch des Schlauchs signalisiert.

Aus dem Stand der Technik sind deshalb Schläuche mit einer Schlauchwand bekannt, in deren elastomerem Basismaterial in vorbestimmten, in Radialrichtung versetzten Abständen farbliche Markierungen eingebracht sind. Bei einem Abrieb an der Mantelinnenseite der Schlauchwand kommen die farbigen Markierungen zum Vorschein. Durch manuelle Inspektion der Mantelinnenseite der Schlauchwand kann deshalb über die jeweils sichtbare Farbe der Markierung auf den Abrieb an der Innenseite der Schlauchwand geschlossen werden. Eine derartige Inspektion ist mit einem hohen Aufwand und großen Kosten verbunden. Denn die Förderung der Flüssigkeit durch den Schlauch oder einen Schlauchstrang muss zunächst unterbrochen werden. Daraufhin bedarf es einer Spülung des Schlauchs bzw. des Schlauchstrangs mit sauberem Wasser. Schließlich ist der Schlauch bzw. der Schlauchstrang zu entleeren, um die Inspektion ausführen zu können. Es besteht deshalb der Wunsch, den entsprechenden Aufwand zu reduzieren.

In der EP 2 932 144 B1 wird ein Schlauch mit einer Schlauchwand vorgeschlagen, in der eine Vielzahl von Transpondern zur Detektion von Beschädigungen eingebettet ist. Die Transponder sind verteilt in der Schlauchwand angeordnet. Die Transponder können von außen per Funk angesteuert werden, sodass zu jedem der Transponder eine Funkverbindung aufbaubar ist. In der Praxis wurde jedoch festgestellt, dass die Verwendung von Transpondern zur Erfassung von Abrieb und/oder Beschädigungen mit einem nicht unerheblichen Aufwand verbunden ist. Zunächst müssen die Transponder einzeln bei der Produktion in die Schlauchwand eingebettet werden. Dies ist sehr aufwendig. Darüber hinaus handelt es sich bei den Transpondern um elektrische Schaltungen, die nicht selten auf einer starren Platine angeordnet sind. Die Transponder können deshalb bei starken Biege- und/oder Zugbeanspruchungen der Schlauchwand beschädigt werden, was sodann zum Ausfall eines entsprechenden Transponders führt.

Die DE 10 2017 105 365 A1 beschreibt ein Verfahren zur Anzeige des Verschleißes bei Schläuchen, umfassend die folgenden Schritte: a) Bereitstellen eines Schlauches, wobei der Schlauch eine Schlauchwand aus Kunststoff, eine Armierung aus Kunststoff oder Metall, und einen elektrischen Leiter umfasst, b) Bereitstellen einer elektrischen Messeinrichtung, c) Anlegen einer elektrischen Spannung an den elektrischen Leiter, d) Bestimmen einer elektrischen Größe des elektrischen Leiters durch die elektrische Messeinrichtung, und e) Erfassen von Änderungen der elektrischen Größe des elektrischen Leiters. Beschrieben ist zudem ein System zur Anzeige des Verschleißes bei Schläuchen.

Die DE 699 32 950 T2 beschreibt einen Schlauch zum Transportieren von abrasivem Material, mit: einer inneren Auskleidung, einer Mehrzahl von Schichten einer Verstärkungslage, die über der inneren Auskleidung angeordnet ist, einem ersten Verschleiß-Abfühlelement, das in einer ersten abgefühlten Schicht in einem ersten Abstand von der innersten Oberfläche der inneren Auskleidung angeordnet ist; mindestens einem zweiten Verschleiß-Abfühlelement in einer zweiten abgefühlten Schicht, die in einem zweiten Abstand von der innersten Oberfläche der inneren Auskleidung angeordnet ist, wobei der zweite Abstand größer als der erste Abstand ist; einer ersten Verschleiß-Abfühlvorrichtung, die mit dem ersten Verschleiß-Abfühlelement zum Bereitstellen einer Angabe einer Ausbreitung des Schlauchverschleißes an der ersten abgefühlten Schicht verbunden ist; und einer zweiten Verschleiß-Abfühlvorrichtung, die mit dem zweiten Verschleiß-Abfühlelement zum Bereitstellen einer Angabe einer Ausbreitung des Schlauchverschleißes an der zweiten abgefühlten Schicht verbunden ist. Zusätzliche Verschleiß-Abfühlelemente sind in dem Schlauchaufbau über irgendeiner zusätzlichen Lagenschicht in zunehmenden Abständen von der inneren Oberfläche der inneren Auskleidung aufgenommen, um zusätzliche Stufen der Verschleiß-Erfassung bereitzustellen.

Die DE 10 2017 105 365 A1 beschreibt ein Verfahren zur Anzeige des Verschleißes bei Schläuchen, umfassend die folgenden Schritte: a) Bereitstellen eines Schlauches, wobei der Schlauch eine Schlauchwand aus Kunststoff, eine Armierung aus Kunststoff oder Metall, und einen elektrischen Leiter umfasst, b) Bereitstellen einer elektrischen Messeinrichtung, c) Anlegen einer elektrischen Spannung an den elektrischen Leiter, d) Bestimmen einer elektrischen Größe des elektrischen Leiters durch die elektrische Messeinrichtung, und e) Erfassen von Änderungen der elektrischen Größe des elektrischen Leiters. Dargestellt und beschrieben ist zudem ein System zur Anzeige des Verschleißes bei Schläuchen.

Die DE 699 32 950 T2 beschreibt einen Schlauch zum Transportieren von abrasivem Material, mit: einer inneren Auskleidung, einer Mehrzahl von Schichten einer Verstärkungslage, die über der inneren Auskleidung angeordnet ist, einem ersten Verschleiß-Abfühlelement, das in einer ersten abgefühlten Schicht in einem ersten Abstand von der innersten Oberfläche der inneren Auskleidung angeordnet ist; mindestens einem zweiten Verschleiß-Abfühlelement in einer zweiten abgefühlten Schicht, die in einem zweiten Abstand von der innersten Oberfläche der inneren Auskleidung angeordnet ist, wobei der zweite Abstand größer als der erste Abstand ist; einer ersten Verschleiß-Abfühlvorrichtung, die mit dem ersten Verschleiß-Abfühlelement zum Bereitstellen einer Angabe einer Ausbreitung des Schlauchverschleißes an der ersten abgefühlten Schicht verbunden ist; und einer zweiten Verschleiß-Abfühlvorrichtung, die mit dem zweiten Verschleiß-Abfühlelement zum Bereitstellen einer Angabe einer Ausbreitung des Schlauchverschleißes an der zweiten abgefühlten Schicht verbunden ist; dadurch gekennzeichnet, dass zusätzliche Verschleiß-Abfühlelemente in dem Schlauchaufbau über irgendeiner zusätzlichen Lagenschicht in zunehmenden Abständen von der inneren Oberfläche der inneren Auskleidung aufgenommen sind, um zusätzliche Stufen der Verschleiß-Erfassung bereitzustellen.

Der Erfindung liegt die Aufgabe zugrunde, einen Schlauch mit einer rohrförmigen Schlauchwand bereitzustellen, wobei eine Abnutzung an der Mantelinnenseite der Schlauchwand mit einfachen Mitteln, besonders präzise und zugleich robust gegenüber mechanischen Biege- und Zugbeanspruchungen erfasst werden kann.

Gelöst wird die Aufgabe durch einen Schlauch mit den Merkmalen des Anspruchs 1. Vorgesehen ist also ein Schlauch, der eine rohrförmige Schlauchwand, mehrere erste Sensorleitungen, mehrere zweite Sensorleitungen, und eine Auswerteeinheit aufweist. Die Schlauchwand weist ein elastomeres Basismaterial mit einem eingebetteten Festigkeitsträger auf. Die ersten und zweiten Sensorleitungen sind in das Basismaterial eingebettet. Die ersten Sensorleitungen sind in einem ringförmigen, ersten Schichtabschnitt der Schlauchwand verteilt angeordnet, der die Innenseite der Schlauchwand bildet. Die zweiten Sensorleitungen sind in einem ringförmigen, zweiten Schichtabschnitt der Schlauchwand verteilt angeordnet, der radial außenseitig zu dem ersten Schichtabschnitt angeordnet ist. Jede der Sensorleitungen ist mit einem zugehörigen ersten Ende direkt oder indirekt mit der Auswerteeinheit elektrisch gekoppelt. Jede der Sensorleitungen ist mit einem zugehörigen zweiten Ende direkt oder indirekt mit der Auswerteeinheit elektrisch gekoppelt. Die Auswerteeinheit ist ausgebildet, die elektrische Leitfähigkeit und/oder Durchgängigkeit jeder der Sensorleitungen zu erfassen. Die Auswerteeinheit ist außerdem ausgebildet, eine Umfangsposition und Radialrichtungsposition einer Abnutzungsstelle an der Innenseite der Schlauchwand basierend auf der erfassten elektrischen Leitfähigkeit und/oder Durchgängigkeit der Sensorleitungen zu ermitteln.

Der ringförmige, erste Schichtabschnitt der Schlauchwand wird auch kurz als erster Schichtabschnitt bezeichnet. Der ringförmige, zweite Schichtabschnitt der Schlauchwand wird auch kurz als zweiter Schichtabschnitt bezeichnet. Der zweite Schichtabschnitt ist radial außenseitig zu dem ersten Schichtabschnitt angeordnet. Bevorzugt schließt der zweite Schichtabschnitt unmittelbar radial außenseitig an den ersten Schichtabschnitt an. In dem ersten Schichtabschnitt sind die ersten Sensorleitungen verteilt angeordnet. Bevorzugt sind die ersten Sensorleitungen in Umfangsrichtung der Schlauchwand verteilt in dem ersten Schichtabschnitt angeordnet. Die zweiten Sensorleitungen sind bevorzugt in Umfangsrichtung der Schlauchwand verteilt in dem zweiten Schichtabschnitt angeordnet. Dadurch kann erreicht werden, dass die ersten und zweiten Sensorleitungen eine Anordnung von Sensorleitungen bilden, die eine Verteilung sowohl in Radialrichtung als auch in Umfangsrichtung gewährleisten. Mit den Sensorleitungen kann eine Abnutzung und/oder Beschädigung an einer Mantelinnenseite der Schlauchwand besonders einfach erfasst werden. Tritt eine Abnutzung an der Mantelinnenseite der Schlauchwand auf, kann dies gleichzeitig zu einem punktuellen und/oder flächigen Abrieb zumindest einer der Sensorleitungen führen, bis die jeweilige Sensorleitung keinen durchgehenden, elektrischen Kontakt mehr hat. Die jeweilige Sensorleitung ist sodann nicht mehr elektrisch leitfähig und/oder sie ist nicht mehr durchgängig.

Jede der Sensorleitungen ist mit der Auswerteeinheit elektrisch gekoppelt. Die Auswerteeinheit kann deshalb ermitteln, bei welcher der Sensorleitungen die elektrische Leitfähigkeit und/oder Durchgängigkeit durch Abnutzung aufgehoben wurde. Außerdem kann in der Auswerteeinheit die geometrische Anordnung der Sensorleitungen hinterlegt sein. Wird von der Auswerteeinheit erfasst, dass eine oder mehrere der Sensorleitungen keine elektrische Leitfähigkeit und/oder Durchgängigkeit mehr aufweisen, kann basierend auf dieser Information sowie der bekannten Anordnung der jeweiligen Sensorleitungen bestimmt werden, in welcher Position die Abnutzung bzw. Abnutzungsstelle in Bezug auf die Umfangsrichtung und die Radialrichtung angeordnet ist. Eine Position in Umfangsrichtung wird als Umfangsposition bezeichnet. Eine Position in Radialrichtung wird als Radialrichtungsposition bezeichnet. Deshalb kann durch die verteilte Anordnung der Sensorleitung in Radialrichtung und Umfangsrichtung mittels der Auswerteeinheit die Abnutzungsstelle ermittelt werden, zumindest hinsichtlich der Position in Umfangsrichtung (Umfangsposition) und in Radialrichtung (Radialrichtungsposition).

Zusätzlich zu den ersten Sensorleitungen und den zweiten Sensorleitungen kann der Schlauch auch noch weitere Sensorleitungen aufweisen. So ist es beispielsweise möglich, dass der Schlauch mehrere dritte Sensorleitungen aufweist. Vorzugsweise sind die dritten Sensorleitungen in einem ringförmigen, dritten Schichtabschnitt der Schlauchwand verteilt angeordnet, der radial außenseitig zu dem zweiten Schichtabschnitt ausgebildet ist. Die vorteilhaften Erläuterungen, Merkmale und/oder Effekte, wie sie im Zusammenhang mit den zweiten Sensorleitungen erläutert worden sind, können in analogerweise für die dritten Sensorleitungen gelten. Die dritten Sensorleitungen bieten darüber hinaus den Vorteil, dass eine Auflösung in Radialrichtung für die Radialrichtungsposition vergrößert oder verfeinert sein kann. Dies ist insbesondere dann von Vorteil, wenn eine gewisse Abnutzung an der Mantelinnenseite der Schlauchwand akzeptabel ist, ohne dass eine erhöhte Gefahr der Zerstörung des Schlauchs besteht. In diesem Fall können beispielsweise die zweiten oder dritten Sensorleitungen durch den bevorzugt vorbestimmten, radialen Abstand des zweiten Schichtabschnitts bzw. dritten Schichtabschnitts von der Mantelinnenseite derart in das Basismaterial der Schlauchwand eingebettet sein, dass eine vollständige Abreibung eines der zweiten Sensorleitungen oder eines der dritten Sensorleitungen die Schwelle zur zulässigen Abnutzung an der Mantelinnenseite indiziert. Wird also die Abnutzung an einer Abnutzungsstelle durch die fehlende elektrische Leitfähigkeit und/oder fehlende Durchgängigkeit einer der ersten Sensorleitungen mittels der Auswerteeinheit erfasst, kann dies zwar als Abnutzungsstelle erkannt werden, jedoch kann diese Abnutzungsstelle als eine akzeptable Abnutzung verstanden werden. Findet eine weitere Abnutzung an der gleichen Abnutzungsstelle an der Mantelinnenseite statt, sodass beispielsweise eine der zweiten Sensorleitungen durchbrochen wird, was zur Aufhebung der elektrischen Leitfähigkeit bzw. Durchgängigkeit führt, so kann dies ebenfalls von der Auswerteeinheit erfasst werden. Außerdem kann die Auswerteeinheit die fehlende elektrische Leitfähigkeit und/oder Durchgängigkeit der jeweiligen zweiten Sensorleitung derart auswerten, dass die daraus ermittelte Abnutzungsstelle als eine kritische Abnutzungsstelle festgestellt wird. Findet weiterhin eine Abnutzung an dem Bereich der zuvor festgestellten Abnutzungsstelle derart statt, dass sogar die dritte Sensorleitung durchbrochen wird, sodass von der Auswerteeinheit eine entsprechende, fehlende elektrische Leitfähigkeit und/oder fehlende Durchgängigkeit erfasst wird, kann dies von der Auswerteeinheit festgestellt werden. Außerdem kann die Auswerteeinheit basierend auf dieser fehlenden elektrischen Leitfähigkeit und/oder Durchgängigkeit der dritten Sensorleitung feststellen, dass ein Zustand des Schlauchs erreicht ist, der keine weitere Nutzung mehr erlaubt. Die zuvor erläuterte Ausgestaltung der Auswerteeinheit in Bezug auf die Auswertung ist jedoch nur rein beispielhaft zu verstehen. Grundsätzlich kann auch eine andere Auswertung der erfassten, elektrischen Leitfähigkeit und/oder Durchgängigkeit der Sensorleitungen vorgesehen sein.

Eine Verteilung von mehreren Sensorleitungen in Radialrichtung bietet den Vorteil, dass mittels der Sensorleitungen auch der Grad der Abnutzung und/oder Beschädigung der Mantelwandung, insbesondere an der Abnutzungsstelle, erfasst werden. Hierzu kann die Auswerteeinheit ausgebildet sein. Umso weiter radial außenseitig eine Sensorleitung angeordnet ist, desto höher ist der erfassbare Grad der Abnutzung und/oder Beschädigung der Mantelwandung, insbesondere an der Abnutzungsstelle. Basierend auf dem Grad der Abnutzung und/oder Beschädigung kann eine Wartung und/oder Reparatur geplant werden. Insbesondere kann die Wartung nach Bedarf erfolgen. Jeder der Sensorleitungen kann als metallische und bzw. oder metallisch leitfähige Sensorleitung ausgebildet sein. Beispielsweise ist jede der Sensorleitungen als ein metallischer Draht, insbesondere Kupferdraht, ausgebildet.

Eine vorteilhafte Ausgestaltung des Schlauchs zeichnet sich dadurch aus, dass jede der Sensorleitungen mit dem zugehörigen zweiten Ende mit einer Rückleitung elektrisch gekoppelt ist, die elektrisch leitfähig, und mit der Auswerteeinheit elektrisch gekoppelt ist, sodass jede der Sensorleitungen mit dem zugehörigen zweiten Ende indirekt über die Rückleitung mit der Auswerteeinheit elektrisch gekoppelt ist. Das zweite Ende jeder der Sensorleitungen kann mit der gleichen Rückleitung elektrisch gekoppelt sein. Somit kann eine gemeinsame Rückleitung für die Sensorleitungen gebildet sein. Dies ist platzsparend. Darüber hinaus lässt sich die Herstellung des Schlauchs dadurch vereinfachen.

Die Sensorleitungen sind bis auf das jeweils zugehörige zweite Ende voneinander beabstandet und/oder weisen keinen mechanischen Kontakt zueinander auf. Vielmehr ist es bevorzugt vorgesehen, dass die Sensorleitungen zumindest bis auf das zweite Ende durch das Basismaterial getrennt voneinander angeordnet sind. Dies bietet den Vorteil, dass eine elektrische Leitfähigkeit und/oder Durchgängigkeit jede der Sensorleitungen individuell mittels der Auswerteeinheit erfasst werden kann.

Erfindungsgemäß ist der Festigkeitsträger elektrisch leitfähig ausgebildet und bildet die Rückleitung. Der Festigkeitsträger ist vorzugsweise in Umfangsrichtung der rohrförmigen Schlauchwand ringförmig umlaufend oder spiralförmig gewendelt ausgebildet. Ein entsprechender Umfangsradius oder Wendelradius des Festigkeitsträgers kann somit zumindest im Wesentlichen dem mittleren Durchmesser der rohrförmigen Schlauchwand entsprechen. Der Festigkeitsträger dient zur Erhöhung der Festigkeit des Schlauchs in dessen Radialrichtung. Durch die spiralförmige Ausgestaltung des Festigkeitsträgers kann sich der Festigkeitsträger jedoch auch über die gesamte Länge der Schlauchwand erstrecken. Der Festigkeitsträger bietet deshalb die Möglichkeit, die Rückleitung zu bilden. Da sich der Festigkeitsträger von den Kontakten der zweiten Enden der Sensorleitungen über die gesamte Länge der Schlauch erstreckt, wird somit eine Rückleitung zur Auswerteeinheit erreicht. Für die elektrische Kopplung zwischen der Auswerteeinheit und dem Festigkeitsträger kann eine weitere Verbindungsleitung vorgesehen sein, die den Festigkeitsträger elektrisch mit der Auswerteeinheit koppelt. In diesem Fall ist der Festigkeitsträger indirekt mit der Auswerteeinheit gekoppelt. Es kann jedoch auch vorgesehen sein, dass die Auswerteeinheit derart angeordnet ist, sodass eine direkte elektrische Kontaktierung zwischen der Auswerteeinheit und dem Festigkeitsträger vorhanden ist.

Eine nicht-erfindungsgemäße Ausgestaltung des Schlauchs ist, dass eine separate, elektrisch leitfähige Leitung die Rückleitung bildet. Diese Leitung kann ebenfalls in das Basismaterial der Schlauchwand eingebettet sein. Die Rückleitung ist in diesem Fall bis auf den Kontakt zu den zweiten Enden der Sensorleitungen von den Sensorleitungen mechanisch beabstandet angeordnet.

Dies kann erreicht werden, indem Basismaterial zwischen der Rückleitung und jeder der Sensorleitungen angeordnet ist. Die Rückleitung kann beispielsweise von einem Kupferkabel gebildet sein. Jede der Sensorleitungen kann von einem metallischen Kabel gebildet sein.

Eine vorteilhafte Ausgestaltung des Schlauchs zeichnet sich dadurch aus, dass das Basismaterial elektrisch isolierend ausgebildet ist. Das Basismaterial kann als elektrisch isolierend verstanden werden, wenn der spezifische elektrische Widerstand des Basismaterials größer als 10⁵ Ω x mm²/m oder größer als 10⁴ Ω x mm²/m ist. Das Basismaterial kann von Gummi oder einer Gummimischung gebildet sein. Das Basismaterial kann jedoch auch von einem anderen elastomeren Kunststoff gebildet sein. Vorzugsweise ist ein Großteil der Schlauchwand von dem elastomeren Basismaterial gebildet.

Eine nicht-erfindungsgemäße Ausgestaltung des Schlauchs ist, dass jede Sensorleitung derart schlaufenförmig angeordnet ist, sodass jede Sensorleitung zwei parallel zueinander angeordnete Leitungsabschnitte aufweist, die zu einem gemeinsamen Umlenkabschnitt führen. Jede Sensorleitung kann also als eine Schlaufe ausgebildet sein. Vorzugsweise weisen die beiden Leitungsabschnitte einer Sensorleitung einen derart geringen Abstand zueinander auf, sodass eine Unterbrechung und/oder Zerstörung eines der beiden Leitungsabschnitte mit der zumindest im Wesentlichen gleichen Umfangsposition und/oder Radialrichtungsposition verbunden ist. Die beiden Leitungsabschnitte der gleichen Sensorleitung weisen vorzugsweise keinen mechanischen Kontakt zueinander auf. Vorzugsweise sind sie durch Basismaterial getrennt. So kann sich beispielsweise ein Leitungsabschnitt einer Sensorleitung in Längsrichtung des Schlauchs vom ersten Endabschnitt der Schlauchwand zu dem anderen, zweiten Endabschnitt der Schlauchwand erstrecken, wo an dem genannten Leitungsabschnitt der Umlenkabschnitt anschließt, der den Übergang zum zweiten Leitungsabschnitt der gleichen Sensorleitung bildet. Dieser Leitungsabschnitt erstreckt sich von dem zweiten Endabschnitt der Schlauchleitung parallel zu dem vorherigen Leitungsabschnitt wieder zum ersten Endabschnitt der Schlauchwand. Diese Ausgestaltung bietet den Vorteil, dass beide Leitungsenden der Sensorleitung am gleichen Endabschnitt der Schlauchwand angeordnet sein können. Dies wiederum erlaubt eine besonders einfache Ankopplung der Sensorleitung an die Auswerteeinheit, um die Durchgängigkeit und/oder elektrische Leitfähigkeit der Sensorleitung zu erfassen.

Eine weitere vorteilhafte Ausgestaltung des Schlauchs zeichnet sich dadurch aus, dass sich jede Sensorleitung von einem ersten Endabschnitt der Schlauchwand zu einem zweiten Endabschnitt der Schlauchwand erstreckt. Die Endabschnitte beziehen sich vorzugsweise auf stirnseitige Endabschnitte. Vorzugsweise erstreckt sich die Schlauchwand in einer Längsrichtung der Schlauchwand zwischen dem ersten Endabschnitt der Schlauchwand und dem zweiten Endabschnitt der Schlauchwand. Jede der Sensorleitungen kann sich also bis auf die zugehörigen Enden in Längsrichtung der Schlauchwand erstrecken. Dadurch kann eine Abnutzung und/oder Beschädigung der Mantelinnenseite der Schlauchwand über die gesamte Länge der Schlauchwand mittels der Sensorleitungen besonders zuverlässig erfasst werden.

Eine weitere vorteilhafte Ausgestaltung zeichnet sich dadurch aus, dass sich jede Sensorleitung in einer oder um eine Erstreckungsachse erstreckt, die parallel und beabstandet zu einer zentralen Längsachse des Schlauchs ist. Vorzugsweise ist jede Erstreckungsachse in dem Basismaterial der Schlauchwand angeordnet. Denn die zentrale Längsachse des Schlauchs erstreckt sich für gewöhnlich durch den Innenraum des Schlauchs, der nicht von dem Basismaterial der Schlauchwand gebildet ist. Vielmehr dient der Innenraum zum Fördern der Flüssigkeit zwischen den Enden des Schlauchs. Es ist jedoch bevorzugt vorgesehen, dass jede der Erstreckungsachsen bevorzugt parallel und radial beabstandet zu der zentralen Längsachse des Schlauchs ist. Wird mittels einer Sensorleitung eine Abnutzungsstelle festgestellt, lässt sich anhand der Umfangsposition und Radialrichtungsposition besonders einfach ein Bereich in Längsrichtung er Schlauchwand eingrenzen, in dem die Beschädigung bzw. Abnutzung aufgetreten sein muss. Dies erlaubt eine besonders sichere, nachvollziehbare und zugleich schnelle Bestimmung des Bereichs der Abnutzungsstelle.

Eine vorteilhafte Ausgestaltung des Schlauchs zeichnet sich dadurch aus, dass die ersten Sensorleitungen nach einem ersten, vorbestimmten Muster in Umfangsrichtung im ersten Schichtabschnitt verteilt angeordnet sind. Das erste, vorbestimmte Muster wird auch kurz als erstes Muster bezeichnet. Die Umfangsrichtung bezieht sich vorzugsweise auf die Umfangsrichtung der Schlauchwand. Durch das erste Muster kann die Anordnung der ersten Sensorleitungen innerhalb des ersten Schichtabschnitts in Bezug auf die Umfangsrichtung vorbestimmt sein. So kann das erste Muster beispielsweise derart ausgestaltet sein, dass die ersten Sensorleitungen jeweils in einem gleichen Winkel in Umfangsrichtung beabstandet zueinander angeordnet sind. Sind beispielsweise vier erste Sensorleitungen vorgesehen, können die ersten Sensorleitungen in Umfangsrichtung beispielsweise jeweils um 90° versetzt zueinander in dem ersten Schichtabschnitt angeordnet sein. Andere Muster zur Anordnung der ersten Sensorleitungen im ersten Schichtabschnitt sind ebenfalls möglich. Dies kann insbesondere von der Anzahl der ersten Sensorleitungen abhängen.

Eine weitere vorteilhafte Ausgestaltung des Schlauchs zeichnet sich dadurch aus, dass die zweiten Sensorleitungen nach einem zweiten, vorbestimmten Muster in Umfangsrichtung im zweiten Schichtabschnitt verteilt angeordnet sind. Das zweite, vorbestimmte Muster wird auch kurz als zweites Muster bezeichnet. Die Umfangsrichtung bezieht sich vorzugsweise auf die Umfangsrichtung der Schlauchwand. Bezüglich des zweiten Musters gelten die vorangegangenen Erläuterungen, bevorzugten Merkmale und Effekte in analogerweise, wie sie im Zusammenhang mit den ersten Sensorleitungen und dem ersten Muster erläutert worden sind. Das zweite Muster kann also bestimmten, wie die Anordnung der zweiten Sensorleitungen in Bezug auf die Umfangsrichtung im zweiten Schichtabschnitt vorgesehen ist. Sind beispielsweise vier zweite Sensorleitungen vorgesehen, so können die zweiten Sensorleitungen in Umfangsrichtung jeweils um 90° versetzt zueinander in dem zweiten Schichtabschnitt angeordnet sein. Das zweite Muster kann analog zu dem ersten Muster ausgestaltet sein.

Eine weitere vorteilhafte Ausgestaltung des Schlauchs zeichnet sich dadurch aus, dass, sofern dritte Sensorleitungen vorgesehen sind, die dritten Sensorleitungen nach einem dritten, vorbestimmten Muster in Umfangsrichtung in dem dritten Schichtabschnitt verteilt angeordnet sind. Für die dritten Sensorleitungen und das dritte Muster gelten die vorteilhaften Erläuterungen, bevorzugten Merkmale und/oder Effekte in analogerweise, wie sie im Zusammenhang mit den zweiten Sensorleitungen und dem zweiten Muster bzw. den ersten Sensorleitungen und dem ersten Muster erläutert worden sind.

Eine weitere vorteilhafte Ausgestaltung des Schlauchs zeichnet sich dadurch aus, dass für jede erste Sensorleitung eine der zweiten Sensorleitungen vorgesehen ist, sodass die jeweilige zweite Sensorleitung in Radialrichtung fluchtend zur jeweiligen ersten Sensorleitung angeordnet ist. Die Radialrichtung bezieht sich vorzugsweise auf die Radialrichtung der Schlauchwand. Dadurch kann eine gestapelte Anordnung von Sensorleitungen mit gleicher Anordnung in Umfangsrichtung jedoch abweichender Anordnung in Radialrichtung erreicht werden.

Sofern dritte Sensorleitungen vorgesehen sind, ist es bevorzugt vorgesehen, dass für jede erste Sensorleitung eine der zweiten Sensorleitungen und eine der dritten Sensorleitungen vorgesehen sind, sodass die jeweilige zweite und dritte Sensorleitung in Radialrichtung fluchtend zur jeweiligen ersten Sensorleitung angeordnet sind. Dadurch kann eine gestapelte Anordnung von dreier Gruppen von Sensorleitungen mit gleicher Anordnung in Umfangsrichtung jedoch abweichender Anordnung in Radialrichtung erreicht werden.

Eine vorteilhafte Ausgestaltung des Schlauchs zeichnet sich dadurch aus, dass von der Auswerteeinheit für jede Sensorleitung eine Position in Umfangsrichtung und eine Position in Radialrichtung durch Positionsdaten gespeichert sind, und wobei die Auswerteeinheit ausgebildet ist, die Umfangsposition und die Radialrichtungsposition einer Abnutzungsstelle außerdem basierend auf den Positionsdaten zu ermitteln. Die Positionsdaten können beispielsweise eine Position in Umfangsrichtung und eine Position in Radialrichtung für jede Sensorleitung, insbesondere für jede erste Sensorleitung und für jede zweite Sensorleitung, individuell je Sensorleitung repräsentieren. So kann beispielsweise für eine der ersten Sensorleitungen die Position in Umfangsrichtung durch einen Winkel von 90° und die Position in Radialrichtung durch den Wert 2 mm gespeichert sein. Für eine weitere erste Sensorleitung können die beiden genannten Positionen durch 180° und 2 mm repräsentiert sein. Für jede der Sensorleitungen kann also eine unterschiedliche Kombination der Position in Umfangsrichtung und Position in Radialrichtung von den Positionsdaten repräsentiert sein. Die Positionsdaten können von der Auswerteeinheit gespeichert sein. Dazu kann die Auswerteeinheit eine Speichervorrichtung aufweisen, die zum Speichern der Positionsdaten ausgebildet ist. Außerdem kann die Auswerteeinheit eine Prozessoreinheit aufweisen, um die Positionsdaten auszulesen und zu verarbeiten. Die Auswerteeinheit ist ausgebildet, um die elektrische Leitfähigkeit und/oder Durchgängigkeit jeder der Sensorleitungen zu erfassen. Wird durch Reibung eine der Sensorleitungen zumindest abschnittsweise zerstört, so folgt daraus, dass die elektrische Leitfähigkeit und/oder Durchgängigkeit dieser Sensorleitung aufgehoben ist. Dies kann von der Auswerteeinheit erfasst werden. Damit kann die Auswerteeinheit die jeweilige Sensorleitung identifizieren. Der Auswerteeinheit stehen die Positionsdaten zur Verfügung. Die Auswerteeinheit kann also für die identifizierte Sensorleitung die zugehörige Position in Umfangsrichtung und die Position in Radialrichtung ermitteln. Basierend auf den Positionsdaten bzw. aus den daraus ermittelten Positionen in Umfangs- und Radialrichtung kann die Auswerteeinheit deshalb die Umfangsposition und Radialrichtungsposition der Abnutzungsstelle an der Innenseite der Schlauchwand ermitteln. Im einfachsten Fall entspricht die Umfangsposition und Radialrichtungsposition der Abnutzungsstelle der Position in Umfangsrichtung bzw. der Position in Radialrichtung für die zuvor erfasste Sensorleitung, deren elektrische Leitfähigkeit und/oder Durchgängigkeit zerstört wurde. Die Auswerteeinheit wird die Umfangsposition und Radialrichtungsposition der jeweiligen Abnutzungsstelle an der Innenseite der Schlauchwand also basierend auf den (bekannten) Positionsdaten und basierend auf der erfassten elektrischen Leitfähigkeit und/oder Durchgängigkeit der Sensorleitungen ermitteln. Eine vorteilhafte Ausgestaltung des Schlauchs zeichnet sich dadurch aus, dass jede Sensorleitung jeweils von einem helixförmig gewickelten Metalldraht oder dass jede Sensorleitung jeweils von einem metallischen Netzstreifen gebildet ist. Jeder dieser beiden Ausgestaltungsvarianten einer Sensorleitung bietet den Vorteil, dass die Sensorleitung stark gedehnt und/oder gebogen werden kann, ohne dass die Dehnung und/oder Biegung zu einer Zerstörung der jeweiligen Sensorleitung führt. Mit anderen Worten bieten sowohl die helixförmige Wicklung der Sensorleitung als auch die netzförmige bzw. netzstreifenförmige Ausgestaltung der Sensorleitung eine hohe Dehnbarkeit und/oder Verformbarkeit der jeweiligen Sensorleitung. Diese Sensorleitungen erlauben deshalb eine gegenüber einer Dehnung und/oder Verformung des Schlauchs robuste Erfassung einer Abnutzungsstelle der Schlauchwand an der Mantelinnenseite. Insbesondere werden Erfassungsfehler durch eine Dehnung und/oder Verformung des Schlauchs vermieden. Darüber hinaus kann der Ausfall der Erfassung der Abnutzung und/oder Beschädigung mittels dieser Sensorleitungen gegenüber bekannten Maßnahmen deutlich reduziert werden.

Eine vorteilhafte Ausgestaltung des Schlauchs zeichnet sich dadurch aus, dass ein Wicklungsdurchmesser jedes helixförmig gewickelten Metalldrahts kleiner als eine Wandstärke der Schlauchwand ist. Der Wicklungsdurchmesser des jeweils helixförmig gewickelten Metalldrahts ist vorzugsweise der in Radialrichtung des Schlauchs gemessene Durchmesser einer Wicklung des Metalldrahts. Der Wicklungsdurchmesser ist kleiner als die Wandstärke der Schlauchwand, sodass der helixförmig gewickelte Metalldraht in einem kleinen Winkelsegment der Schlauchwand gewickelt angeordnet sein kann, und sich aufgrund der zugehörigen Helixform in Längsrichtung der Schlauchwand erstrecken kann. Die Wandstärke der Schlauchwand ist vorzugsweise eine Dicke der Schlauchwand gemessen in einer Radialrichtung des Schlauchs. So ist es beispielsweise möglich, dass der Wicklungsdurchmesser eines jeden helixförmig gewickelten Metalldrahts kleiner als 50 %, kleiner als 30 %, kleiner als 20 % oder kleiner als 15 % der Wandstärke der Schlauchwand ist.

Jeder metallische Netzstreifen ist vorzugsweise von mindestens einem netzförmig verknüpften und/oder verbundenen Draht gebildet, sodass von dem mindestens einen Draht eine Netz- und/oder Maschenstruktur mit regelmäßigen und/oder unregelmäßigen Maschen sowie Kreuzungspunkten gebildet ist. An den Kreuzungspunkten stoßen zwei Abschnitte des gleichen Drahts oder unterschiedlicher Drähte aufeinander. Das von dem mindestens einen Draht gebildete, metallische Netz ist streifenförmig ausgestaltet. Die Länge des Netzstreifens ist deshalb größer als die Breite des Netzstreifens. Die Höhe des Netzstreifens ist wesentlich kleiner als die Breite und die Länge des Netzstreifens. Die Höhe des Netzstreifens kann beispielsweise das 1 ,5-fache bis das Fünffache eines mittleren Durchmessers eines Drahts sein, der zur Herstellung des Netzstreifens verwendet wird. Die Breite des Netzstreifens ist vorzugsweise mindestens das Dreifache der Höhe des Netzstreifens. Die Länge des Netzstreifens ist vorzugsweise mindestens das Sechsfache der Höhe des Netzstreifens. Durch die netzförmige Ausgestaltung des Netzstreifens kann der Netzstreifen besonders stark gedehnt und/oder gebogen werden, ohne dass es zu einer Zerstörung mit einer Unterbrechung zwischen zwei Teilen des Netzstreifens kommt. Vielmehr ist es bevorzugt vorgesehen, dass der Netzstreifen auch bei einer starken Dehnung und/oder Biegung einen durchgehend elektrischen Kontakt gewährleistet. Entsprechendes gilt für eine Sensorleitung aus einem derartigen Netzstreifen.

Eine vorteilhafte Ausgestaltung des Schlauchs zeichnet sich dadurch aus, dass die Breite jedes metallischen Netzstreifens kleiner als eine Hälfte des Umfangs der Schlauchwand oder kleiner als ein Viertel des Umfangs der Schlauchwand ist. Der Umfang bezieht sich auf die Umfangslänge in Umfangsrichtung. Indem die Breite des jeweiligen Netzstreifens in Umfangsrichtung der Schlauchwand begrenzt ist, nämlich beispielsweise auf maximal die Hälfte oder maximal das Viertel des Umfangs der Schlauchwand, kann selbst eine starke Verformung der Schlauchwand keine Zerstörung des Netzstreifens hervorrufen. Insbesondere wenn die Breite des jeweiligen Netzstreifens kleiner als ein Viertel des Umfangs oder sogar kleiner als ein Achtel des Umfangs der Schlauchwand ist, ist es möglich, dass mehrere als Sensorleitung ausgebildete Netzstreifen in Umfangsrichtung der Schlauchwand verteilt angeordnet sind. Auf die entsprechenden Erläuterungen, wie sie hierzu zuvor im Zusammenhang mit den mehreren Sensorleitungen erklärt worden sind, wird in analogerweise Bezug genommen.

Eine vorteilhafte Ausgestaltung des Schlauchs zeichnet sich dadurch aus, dass jeder Netzstreifen der Umfangsrichtung der Schlauchwand folgend gewölbt ist. In der Breite erstreckt sich der jeweilige Netzstreifen deshalb vorzugsweise in Umfangsrichtung. Mit anderen Worten kann jeder Netzstreifen bis auf die zugehörigen Endabschnitte in einer Radialebene der Schlauchwand angeordnet sein.

Eine weitere vorteilhafte Ausgestaltung des Schlauchs zeichnet sich dadurch aus, dass die Auswerteeinheit an der Schlauchwand befestigt und/oder zumindest teilweise in die Schlauchwand eingesenkt oder in die Schlauchwand eingebettet ist.

Die Auswerteeinheit kann dazu ausgebildet sein, um den elektrischen Widerstand jeder Sensorleitung zu erfassen und/oder zu überwachen. Ist eine Sensorleitung nicht unterbrochen sondern durchgängig, so wird der elektrische Widerstand der Sensorleitung gering bzw. die elektrische Leitfähigkeit hoch sein. Ist die Sensorleitung jedoch unterbrochen, insbesondere durch die Abnutzung und/oder Beschädigung der Schlauchwand an der Mantelinnenseite, so wird die jeweilige Sensorleitung einen sehr hohen elektrischen Widerstand repräsentieren und/oder haben. Im gleichen Fall wird die jeweilige Sensorleitung eine sehr niedrige Leitfähigkeit aufweisen. Denn an der Bruchstelle ist die metallische Sensorleitung nicht mehr ausgebildet. Hingegen wird hier ein anders Medium eintreten, was für gewöhnlich einen deutlich höheren elektrischen Widerstand als das Metall der Sensorleitung hat. Die Auswerteeinheit kann durch die Ermittlung und/oder Überwachung des Widerstands einer jeweiligen Sensorleitung also ermitteln, ob die Sensorleitung elektrisch leitfähig und/oder durchgängig ist. Darüber hinaus kann über die Sensorleitung eine Abnutzung und/oder eine Beschädigung festgestellt werden, wenn eine Sensorleitung zumindest im Wesentlichen nicht mehr elektrisch leitfähig und/oder nicht mehr durchgängig ist.

Eine vorteilhafte Ausgestaltung des Schlauchs zeichnet sich dadurch aus, dass die Auswerteeinheit mit dem Festigkeitsträger direkt oder indirekt gekoppelt ist, um die elektrische Leitfähigkeit und/oder Durchgängigkeit von jeder Sensorleitung zu erfassen. Diese Ausgestaltung ist insbesondere dann von Vorteil, wenn das zweite Ende jeder Sensorleitung mit dem Festigkeitsträger verbunden ist. Denn in diesem Fall kann der Festigkeitsträger als Rückleitung dazu verwendet werden, um den elektrischen Kontakt zwischen der Auswerteeinheit und dem jeweiligen zweiten Ende der Sensorleitungen herzustellen. Dass die zweiten Enden der Sensorleitungen mit dem gleichen Festigkeitsträger elektrisch verbunden sind, ist nicht von Nachteil. Denn das erste Ende jeder Sensorleitung ist außerdem mit der Auswerteeinheit direkt oder indirekt gekoppelt. Über den dezidierten Anschluss der ersten Enden der Sensorleitungen ist es deshalb der Auswerteeinheit möglich, die elektrische Leitfähigkeit und/oder Durchgängigkeit jeder der Sensorleitungen individuell zu ermitteln und/oder zu überwachen. Darüber hinaus ist es nicht nachteilig, wenn der Festigkeitsträger beispielsweise von einem spiralförmigen Festigkeitsträger aus Stahl gebildet ist. Ein derartiger Festigkeitsträger kann sich in Umfangsrichtung mit etwa dem gleichen Durchmesser wie die Schlauchwand durch das Basismaterial erstrecken. Durch die Spiralform erstreckt sich der Festigkeitsträger jedoch auch in Längsrichtung der Schlauchwand. Dadurch kann gewährleistet werden, dass die Auswerteeinheit beispielsweise an einem Endabschnitt des Schlauchs angeordnet ist und zugleich der elektrische Kontakt zwischen der Auswerteeinheit und den Enden der Sensorleitungen direkt oder indirekt besteht.

Eine vorteilhafte Ausgestaltung des Schlauchs zeichnet sich dadurch aus, dass die Auswerteeinheit ausgebildet ist, ein Auswertesignal zu erzeugen, das die Umfangsposition und die Radialrichtungsposition der ermittelten Abnutzungsstelle repräsentiert. Diese Auswertesignal kann von der Auswerteeinheit für weitere Zwecke zu Verfügung gestellt werden, um die entsprechenden Informationen für die Positionen der Abnutzungsstelle zu teilen.

Eine vorteilhafte Ausgestaltung des Schlauchs zeichnet sich dadurch aus, dass die Auswerteeinheit ausgebildet ist, Positionen in Umfangsrichtung und Radialrichtung der Sensorleitungen auszuwerten, deren elektrische Leitfähigkeit und/oder Durchgängigkeit als nicht mehr vorhanden erfasst wurde. Die Auswerteeinheit kann zum Ausführen der Auswertung derart konfiguriert sein, dass ein Fehler festgestellt wird, wenn die fehlende elektrische Leitfähigkeit und/oder die fehlende Durchgängigkeit mindestens einer dieser Sensorleitungen logisch und/oder konstruktiv nicht möglich ist. Dies ist beispielsweise der Fall, wenn zwei Sensorleitungen in Radialrichtung übereinander im Basismaterial der Schlauchwand eingebettet sind und mittels der Auswerteeinheit erfasst wird, dass die radial innenseitige Sensorleitung eine Durchgängigkeit aufweist, während mittels der Auswerteeinheit ermittelt wird, dass die radial außenseitig angeordnete Sensorleitung keine Durchgängigkeit aufweist. Dies ist logisch nicht möglich, denn die Abnutzung findet durch die geförderte Flüssigkeit in Radialrichtung von innen nach außen statt.

Eine vorteilhafte Ausgestaltung des Schlauchs zeichnet sich dadurch aus, dass die Auswerteeinheit ausgebildet ist, ein Fehlersignal zu erzeugen, wenn die Positionen in Umfangs- und Radialrichtung der erfassten Sensorleitungen mit fehlender elektrischer Leitfähigkeit und/oder Durchgängigkeit logisch nicht möglich sind. Dies kann beispielsweise dann erfolgen, wenn dies zuvor mittels der Auswerteinheit festgestellt wurde.

Eine vorteilhafte Ausgestaltung des Schlauchs zeichnet sich dadurch aus, dass die Auswerteeinheit eine Funkeinheit zur schnurlosen Übertragung des Auswertesignals und/oder Fehlersignals aufweist. Die Funkeinheit kann beispielsweise zum Senden des Auswertesignals und/oder des Fehlersignals ausgebildet sein. Die Funkeinheit kann jedoch auch zum Empfang eines Abfragesignals ausgebildet sein, das, wenn es empfangen wird, von der Auswerteeinheit ausgewertet wird und daraufhin das Aussenden des Auswertesignals und/oder Fehlersignals initiiert wird. Die Funkeinheit kann integral mit der Auswerteeinheit ausgebildet sein. Es ist jedoch auch möglich, dass die Funkeinheit der Auswerteeinheit zugeordnet ist. In beiden Fällen soll dies so verstanden werden, dass die Funkeinheit einen Teil der Auswerteeinheit bildet.

Eine vorteilhafte Ausgestaltung des Schlauchs zeichnet sich dadurch aus, dass die Auswerteeinheit eine Signalübertragungseinheit zum leitungsgebundenen Übertragung des Auswertesignals und/oder Fehlersignals aufweist. In Bezug auf die Übertragung als solches wird auf die vorangegangen Erläuterungen, Vorteile und Effekte in analoger Weise verwiesen.

Eine vorteilhafte Ausgestaltung des Schlauchs zeichnet sich dadurch aus, dass die Auswerteeinheit teilweise oder vollständig in das Basismaterial der Schlauchwand eingebettet ist. Durch die Einbettung der Auswerteeinheit in das Basismaterial der Schlauchwand kann besonders einfach und wirkungsvoll gewährleistet werden, dass die Auswerteeinheit vor äußeren mechanischen Beeinflussungen geschützt ist. Dies gilt insbesondere dann, wenn die Auswerteeinheit vollständig in das Basismaterial eingebettet ist. In diesem Fall kann die Auswerteeinheit vor äußeren mechanischen Schlägen und/oder Stößen geschützt sein. Aber selbst wenn die Auswerteeinheit nur teilweise in das Basismaterial eingebettet ist, besteht bereits ein höherer mechanischer Schutz.

Diese Ausgestaltung bietet die Möglichkeit, dass die Auswerteeinheit besonders einfach und schnell gewartet werden kann.

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
- Figur 1: zeigt einen Teil einer vorteilhaften Ausgestaltung eines Schlauchs in einer perspektivischen und schematischen Ansicht.
- Figur 2: zeigt den schematischen Querschnitt einer weiteren vorteilhaften Ausgestaltung eines Schlauchs.
- Figur 3: zeigt eine vorteilhafte Ausgestaltung eines Netzstreifens.
- Figur 4: zeigt den schematischen Querschnitt einer weiteren, vorteilhaften Ausgestaltung eines Schlauchs.
- Figur 5: zeigt eine vorteilhafte Ausgestaltung eines helixförmig gewickelten Metalldrahts in einer schematischen Darstellung.
- Figuren 6 - 8: zeigen jeweils einen Ausschnitt der Schlauchwand in unterschiedlichen Abnutzungsgraden in schematischen Darstellungen.
- Figur 9: zeigt eine weitere vorteilhafte Ausgestaltung des Schlauchs in einer schematischen Längsquerschnittsansicht.

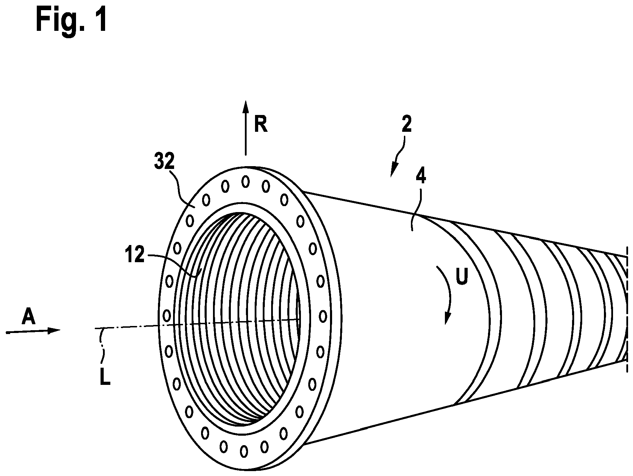

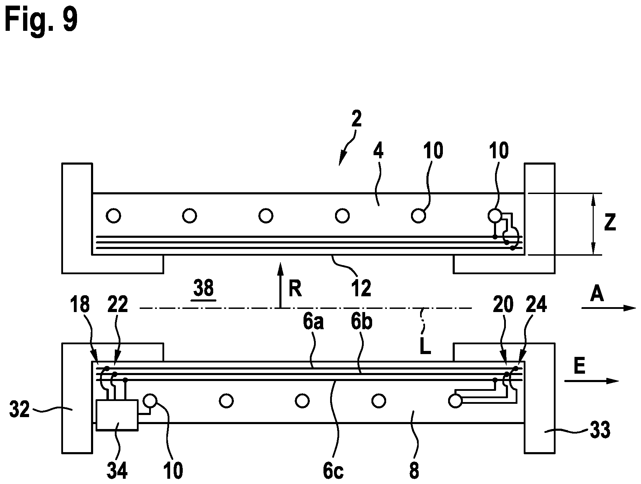

In der Figur 1 ist ein Teil einer vorteilhaften Ausgestaltung eines Schlauchs 2 in einer perspektivischen Ansicht schematisch dargestellt. Entlang einer Längsachse geschnitten ist der Schlauch 2 in der Figur 9 dargestellt. Der Schlauch 2 weist eine rohrförmige Schlauchwand 4 auf. Die Schlauchwand 4 weist ein elastomeres Basismaterial 8 auf. Das Basismaterial 8 ist vorzugsweise aus Gummi oder einem anderen elastomeren Kunststoff gebildet. Vorzugsweise ist ein Großteil der Schlauchwand 4 aus dem elastomeren Basismaterial 4 gebildet. Elastomeres Basismaterial 4 wird auch kurz als Basismaterial 4 bezeichnet. In das Basismaterial 4 ist mindestens ein Festigkeitsträger 10 eingebettet. Vorzugsweise ist der Festigkeitsträger 10 als ein spiralförmig gewundener Festigkeitsträger 10 ausgebildet. In der Figur 9 sind die Schnitte der Windungen des Festigkeitsträgers 10 deshalb als in Längsrichtung A des Schlauchs 2 versetzte Kreise dargestellt. Der Festigkeitsträger 10 ist vorzugsweise durch einen ununterbrochenen, metallischen Draht oder eine entsprechend spiralförmig geformte Rundstange gebildet. In der Praxis hat es sich als vorteilhaft herausgestellt, wenn der Festigkeitsträger 10 aus Metall, insbesondere aus Stahl ist. Denn in diesem Fall kann der Festigkeitsträger 10 die Festigkeit des Schlauchs 2 in dessen Radialrichtung R zumindest mitbestimmen. Dabei ist der Festigkeitsträger 10 in das Basismaterial 8 der Schlauchwand 4 eingebettet.

Der Schlauch 2 weist außerdem mehrere erste Sensorleitungen 6a, mehrere zweite Sensorleitungen 6b und mehrere dritte Sensorleitungen 6c auf. Jede der Sensorleitungen 6a, 6b, 6c ist in das Basismaterial 8 der Schlauchwand 4 eingebettet.

Wie es beispielhaft aus der Figur 9 zu entnehmen ist, sind die Sensorleitungen 6a, 6b, 6c in der Nähe zur Mantelinnenseite 12 Schlauchwand 4 eingebettet, um eine Abnutzung und eine zugehörige Abnutzungsstelle an der Mantelinnenseite 12 feststellen zu können.. Wird die Schlauchwand 4 beim Fördern von Flüssigkeit mit Feststoffen und/oder Festkörpern abgerieben, kann es auch zu einem Abrieb und somit zu einer teilweisen Zerstören einer der Sensorleitungen 6a, 6b, 6c kommen. In diesem Fall wird die elektrische Leitfähigkeit und/oder die Durchgängigkeit der jeweiligen Sensorleitung 6a, 6b, 6c aufgehoben. Dies kann von einer Auswerteinheit 34 erfasst werden, die mit jeder der Sensorleitung 6a, 6b, 6c elektrisch gekoppelt ist. Hierauf soll jedoch erst später eingegangen werden.

In der Praxis werden Schläuche 2 zum Fördern von Flüssigkeit eingesetzt, in die Feststoffe und/oder Festkörper eingemischt sind. Aufgrund des hohen Gewichts beim Fördern derartiger Flüssigkeit unterliegen die Schläuche 2 nicht selten einer Durchbiegung und/oder einer Dehnung in Längsrichtung A. Darüber hinaus werden Schläuche 2 oftmals über Kanten oder Vorsprünge hinweg verlegt, was zu einer entsprechen starken Dehnung in einem begrenzten Abschnitt des Schlauchs 2 führt. Gerade in derartigen Abschnitten findet jedoch eine sehr große Abnutzung und/oder Abreibung des Basismaterials 8 an der Mantelinnenseite 12 des Schlauchs 2 statt. Es ist deshalb besonders wünschenswert, dass die Sensorleitungen 6a, 6b, 6c auch bei einer großen Biegung und/oder Dehnung des Schlauchs 2 nicht zerstört werden, sondern weiterhin dazu geeignet sind, eine elektrische Leitfähigkeit und/oder Durchgängigkeit verlässlich erfassen zu können. Für den Schlauch 2 ist es deshalb bevorzugt vorgesehen, dass jede Sensorleitung 6a, 6b, 6c jeweils von einem helixförmig gewickelten Metalldraht 14 oder von einem metallischen Netzstreifen 16 gebildet ist.

Darüber hinaus hat es sich als vorteilhaft herausgestellt, wenn sich jede der Sensorleitungen 6a, 6b, 6c von einem ersten Endabschnitt 22 der Schlauchwand 4 zu einem zweiten Endabschnitt 24 der Schlauchwand 4 erstreck. Denn diese Ausgestaltung der Sensorleitungen 6a, 6b, 6c bietet den Vorteil, dass eine Beschädigung und/oder Abnutzung an der Mantelinnenseite 12 der Schlauchwand 4 über zumindest im Wesentlichen die gesamte Länge des Schlauchs 2 erfasst werden kann.

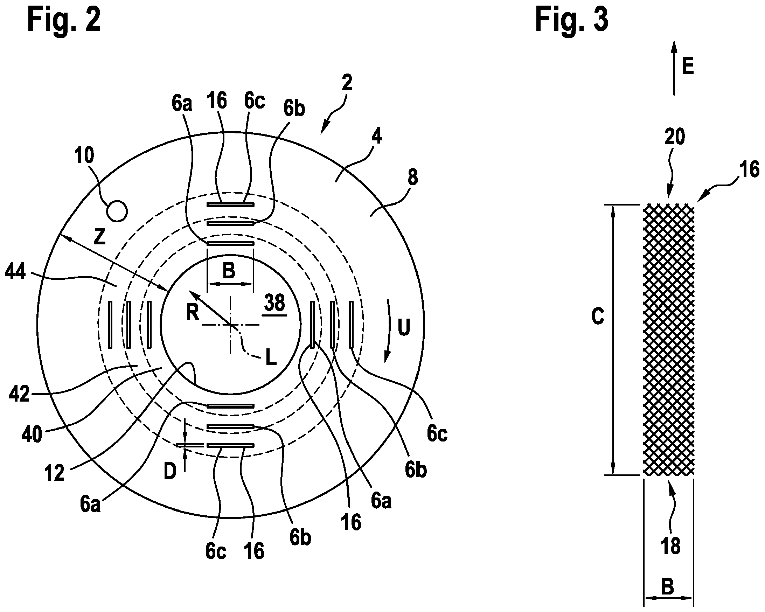

In der Figur 2 ist eine beispielhafte Ausgestaltung eines Schlauchs 2 in einer schematischen Querschnittsdarstellung wiedergegeben, wobei jede der Sensorleitungen 6a, 6b, 6c von einem metallischen Netzstreifen 16 gebildet ist. Ein derartiger Netzstreifen 16 ist schematisch in der Figur 3 in einer Draufsicht dargestellt. Der Netzstreifen 16 ist von einem oder mehreren gitterförmig angeordneten Metalldrähten gebildet. Die Breite B des Netzstreifens 16 ist kleiner als die Länge C des Netzstreifens 16. Jede der Sensorleitungen 6a, 6b, 6c ist von einem derartigen Netzstreifen 16 gebildet. Aufgrund der Querschnittsdarstellung in Fig. 2 sind die Netzstreifen 16 als Ausgestaltung der Sensorleitung 6 in Fig. 2 ebenfalls im Querschnitt dargestellt. Aus der Fig. 2 kann deshalb ebenfalls entnommen werden, dass die Höhe D eines jeden Netzstreifens 16 wesentlich kleiner als die Breite B bzw. die Länge C des Netzstreifens 16 ist.

Aus der Figur 2 ist außerdem beispielhaft zu entnehmen, dass die Sensorleitungen 6a, 6b, 6c in Radialrichtung R und in Umfangsrichtung U verteilt in dem Basismaterial 8 eingebettet angeordnet sind. Die Sensorleitungen 6a, 6b, 6c werden dazu in erste Sensorleitungen 6a, zweite Sensorleitungen 6b und optional dritte Sensorleitungen 6c unterschieden. Auch wenn im Folgenden die dritten Sensorleitungen 6c mit erläutert werden, kann eine Ausgestaltung des Schlauchs auch ohne die dritten Sensorleitungen 6c oder mit sogar weiteren Sensorleitungen ausgebildet sein.

Die ersten Sensorleitungen 6a sind in einem ringförmigen, ersten Schichtabschnitt 40 der Schlauchwand 4 verteilt angeordnet sind, der die Innenseite 12 der Schlauchwand 4 bildet. Die Innenseite 12 wird auch als Mantelinnenseite 12 bezeichnet. Die zweiten Sensorleitungen 6b sind in einem ringförmigen, zweiten Schichtabschnitt 42 der Schlauchwand 4 verteilt angeordnet sind, der radial außenseitig zu dem ersten Schichtabschnitt 40 ausgebildet ist. Die dritten Sensorleitungen 6c sind in einem ringförmigen, dritten Schichtabschnitt 42 der Schlauchwand 4 verteilt angeordnet sind, der radial außenseitig zu dem zweiten Schichtabschnitt 42 ausgebildet ist. Die ringförmigen Schichtabschnitte 40, 42 ,44 sind in Radialrichtung direkt hintereinander ausgebildet. Die Schichtabschnitte 40, 42 ,44 repräsentieren vorzugsweise eine örtliche Aufteilung der Schlauchwand 4, ohne dass die Schlauchwand 4 tatsächlich in einzelne Teile geteilt ist, die von den Schichtabschnitten 40, 42 ,44 gebildet sind. Vielmehr sind die Schichtabschnitte 40, 42 ,44 als integrale Bestandteile der Schlauchwand 4 zu verstehen. Die Schichtabschnitte 40, 42 ,44 sind deshalb auch nur durch gestrichelte Linien angedeutet. Die Schichtabschnitte 40, 42 ,44 weisen vorzugsweise nur das Basismaterial 8 und die jeweils zugehörigen Sensorleitungen 6a, 6b, 6c auf.

Indem die einem ringförmigen Schichtabschnitt 40, 42 ,44 zugeordneten Sensorleitungen 6a, 6b, 6c einen etwa gleichen radialen Abstand zur Mantelinnenseite 12 aufweisen, kann mittels der Auswerteeinheit 34 bereits aufgrund der Zuordnung einer Sensorleitung 6a, 6b, 6c zu einer der Schichtabschnitte 40, 42 ,44 ein Grad der Abnutzung ermittelt werden.

Wird beispielsweise ein radialinnenseitig angeordnete Sensorleitung 6a bei einer leichten oder geringen Abnutzung zunächst zerstört, sodass die Durchgängigkeit und/oder elektrische Leitfähigkeit diese Sensorleitung 6a nicht mehr gegeben ist, kann dies von der mit den Sensorleitungen 6a gekoppelten Auswerteeinheit 34 erfasst werden. Aber selbst wenn das Fördern der Flüssigkeit mit eingemischten Feststoff oder Festkörper fortgesetzt wird, kann eine weitere Abnutzung mittels der weiteren Sensorleitung 6b erfasst werden, die radial außenseitig zu der zuvor abgenutzten Sensorleitung 6a angeordnet ist bzw. war. Grundsätzlich können in Radialrichtung R mehrere Sensorleitungen 6a, 6b, 6c fluchtend übereinander angeordnet sein. Diese in Radialrichtung R übereinander angeordneten Sensorleitungen 6a, 6b, 6c können eine Gruppe von Sensorleitungen 6a, 6b, 6c bilden. Für den Schlauch 2 können mehrere derartige Gruppen von Sensorleitungen 6a, 6b, 6c vorgesehen sein, wobei die Gruppen in Umfangsrichtung U versetzt, beispielsweise um einen vorbestimmten Winkel, wie 90 Grad, 60 Grad oder 45 Grad, angeordnet sein.

Bevorzugt ist es für den Schlauch 2 vorgesehen, dass die ersten Sensorleitungen 6a nach einem ersten, vorbestimmten Muster in Umfangsrichtung U im ersten Schichtabschnitt 40 verteilt angeordnet sind. Durch das erste Muster kann die Anordnung der ersten Sensorleitungen 6a innerhalb des ersten Schichtabschnitts 40 in Bezug auf die Umfangsrichtung U vorbestimmt sein. So kann das erste Muster beispielsweise derart ausgestaltet sein, dass die ersten Sensorleitungen 6a jeweils in einem gleichen Winkel in Umfangsrichtung U beabstandet zueinander angeordnet sind. Sind beispielsweise vier erste Sensorleitungen 6a vorgesehen, können die ersten Sensorleitungen 6a in Umfangsrichtung beispielsweise jeweils um 90° versetzt zueinander in dem ersten Schichtabschnitt 40 angeordnet sein.

Vorzugsweise sind die zweiten Sensorleitungen 6b nach einem zweiten, vorbestimmten Muster in Umfangsrichtung U im zweiten Schichtabschnitt 42 verteilt angeordnet sind. Durch das zweite Muster kann die Anordnung der zweiten Sensorleitungen 6b innerhalb des zweiten Schichtabschnitts 42 in Bezug auf die Umfangsrichtung U vorbestimmt sein. Sind beispielsweise vier zweite Sensorleitungen 6b vorgesehen, so können die zweiten Sensorleitungen 6b in Umfangsrichtung U jeweils um 90° versetzt zueinander in dem zweiten Schichtabschnitt 42 angeordnet sein. Das zweite Muster kann analog zu dem ersten Muster ausgestaltet sein.

Außerdem ist es bevorzugt vorgesehen, dass die dritten Sensorleitungen 6c nach einem dritten, vorbestimmten Muster in Umfangsrichtung U in dem dritten Schichtabschnitt 44 verteilt angeordnet sind. Durch das dritte Muster kann die Anordnung der dritten Sensorleitungen 6c innerhalb des dritten Schichtabschnitts 44 in Bezug auf die Umfangsrichtung U vorbestimmt sein. Sind beispielsweise vier dritte Sensorleitungen 6c vorgesehen, so können die dritten Sensorleitungen 6c in Umfangsrichtung U jeweils um 90° versetzt zueinander in dem dritten Schichtabschnitt 44 angeordnet sein. Das dritte Muster kann analog zu dem ersten und/oder zweiten Muster ausgestaltet sein.

Die in Umfangsrichtung U und in Radialrichtung R verteilte Anordnung der Sensorleitungen 6a, 6b, 6c bietet die Möglichkeit, dass eine Abnutzungsstelle an der Mantelinnenseite 12 der Schlauchwand 4 besonders einfach, präzise und verlässlich erfassen zu können.

Die zuverlässige Erfassung mittels der Sensorleitungen 6a, 6b, 6c verschlechtert sich jedoch nicht, wenn der Schlauch 2 stark gedehnt oder stark gebogen ist. Denn insbesondere bei der in Figur 2 beispielhaft dargestellten Ausgestaltung des Schlauchs 2 ist es vorgesehen, dass jede der Sensorleitungen 6a, 6b, 6c von einem metallischen Netzstreifen 16 gebildet ist. Die netzförmige Struktur dieses Netzstreifens 16 erlaubt eine große Dehnung insbesondere in Richtung der Breite B und/oder der Richtung der Länge C. Der Netzstreifen 16 wird also auch bei einer starken Verbiegung und/oder Dehnung nicht zerstört. Dies gewährleistet die verlässliche Erfassungsmöglichkeit der Beschädigung und/oder Abnutzung an der Mantelinnenseite 12 der Schlauchwand 4.

Außerdem sei an dieser Stelle erwähnt, dass der im Querschnitt in Figur 2 dargestellte Schlauch rein schematisch wiedergegeben ist. Die tatsächlichen Proportionen in Bezug auf den Innendurchmesser und den Außendurchmesser des Schlauchs 2 bzw. der Schlauchwand 4 kann in der Praxis deutlich anders ausfallen.

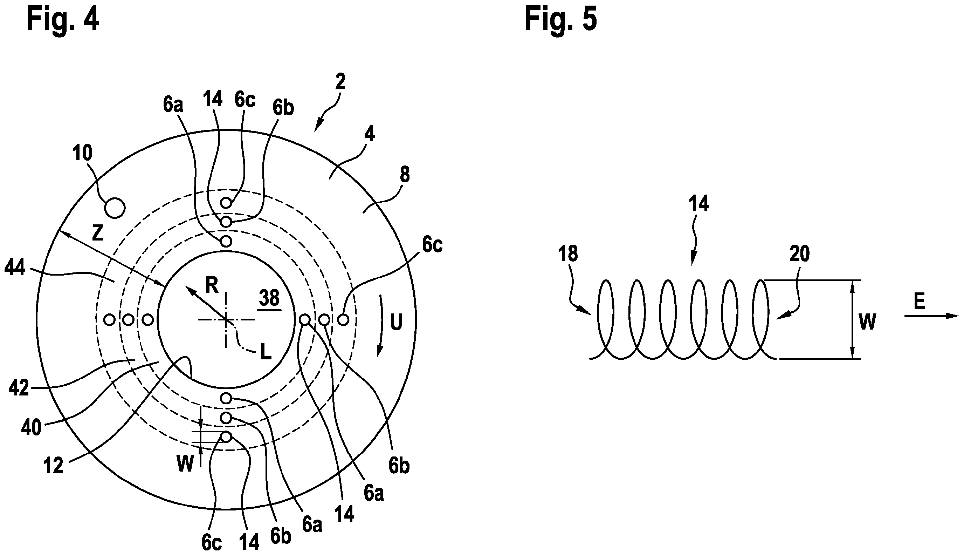

In der Figur 4 ist eine weitere vorteilhafte Ausgestaltung eines Schlauchs 2 in einer schematischen Querschnittsansicht gezeigt. Diese Ausgestaltung des Schlauchs 2 unterscheidet sich von der in Figur 2 dargestellten Ausgestaltung des Schlauchs 2 durch die jeweilige Ausgestaltung der Sensorleitungen 6a, 6b, 6c. Denn für die Ausgestaltung des Schlauchs 2 aus Figur 4 ist es vorgesehen, dass jede Sensorleitung 6a, 6b, 6c jeweils von einem helixförmig gewickelten Metalldraht 14 gebildet ist. Auf die Erläuterungen zu der Ausgestaltung des Schlauchs 2 in Zusammenhang mit Figur 2 wird deshalb für die Ausgestaltung des Schlauchs 2 aus Figur 4 in analoger Weise Bezug genommen. Auf die sich auf die Ausgestaltung der Sensorleitung 6a, 6b, 6c als helixförmig gewickelten Metalldraht 14 beziehenden Eigenschaften, Effekte und/oder Vorteile wird im Folgenden eingegangen.

In der Figur 5 ist ein helixförmig gewickelter Metalldraht 14 beispielhaft dargestellt. Der helixförmig gewickelte Metalldraht 14 wird auch kurz als Metalldraht 14 bezeichnet. Der Metalldraht 14 ist derart gewickelt, dass sich der Metalldraht 14 von einem ersten Ende 18 zu einem zweiten Ende 20 erstreckt. Es wird deshalb auch davon gesprochen, dass sich der Metalldraht 14 in einer Erstreckungsrichtung entlang der Erstreckungsachse E erstreckt. Der Metalldraht 14 kann sich also in Erstreckungsrichtung um die Erstreckungsachse E erstrecken, und zwar zwischen dem ersten Ende 18 und dem zweiten Ende 20. Außerdem ist der Metalldraht 14 derart helixförmig gewickelt, dass der Metalldraht 14 einen Wicklungsdurchmesser W aufweist. Vorzugsweise ist der Wicklungsdurchmesser Wjedes helixförmig gewickelten Metalldrahts 14 kleiner als eine Wandstärke Z der Schlauchwand 4.

Wie aus der Figur 4 beispielhaft und schematisch zu entnehmen ist, sind die jeweils als helixförmig gewickelten Metalldraht 14 ausgestalteten Sensorleitungen 6a, 6b, 6c in Radialrichtung R und in Umfangsrichtung U verteilt angeordnet. Um die Anordnung von mehreren helixförmig gewickelten Metalldrähten 14 zu erlauben, ist es von Vorteil, wenn der Windungsdurchmesser W eines jeden helixförmig gewickelten Metalldrahts 14 kleiner als 30 %, kleiner als 20 % oder kleiner als 15 % der Wandstärke Z der Schlauchwand 4 ist.

Aufgrund der helixförmigen Wicklung des Metalldrahts 14 kann der Metalldraht 14 ohne Zerstörung besonders stark gedehnt und/oder gebogen werden. Die durch helixförmig gewickelten Metalldrähte 14 ausgebildeten Sensorleitungen 6a, 6b, 6c sind also besonders robust gegen eine mechanische Verformung und/oder Dehnung des Schlauchs 2.

In der Fig. 9 sind die in Radialrichtung R verteilten Sensorleitungen 6a, 6b, 6c in einer in Längsrichtung geschnittenen Darstellung schematisch dargestellt. Als besonders vorteilhaft hat es sich herausgestellt, wenn sich jede Sensorleitung 6a, 6b, 6c mit einem jeweils zugehörigen ersten Ende 18 von dem ersten Endabschnitt 22 der Schlauchwand 4 zu einem jeweils zugehörigen zweiten Ende 20 erstreckt, wobei das jeweilige zweite Ende 20 im zweiten Endabschnitt 24 der Schlauchwand 4 endet. Jede Sensorleitung 6a, 6b, 6c kann sich also von dem ersten Endabschnitt 22 zu dem zweiten Endabschnitt 24 der Schlauchwand 4 erstrecken, vorzugsweise in der zugehörigen Erstreckungsrichtung E.

Außerdem ist jede der Sensorleitungen 6a, 6b, 6c mit dem jeweils zugehörigen ersten Ende 18 direkt oder indirekt mit der Auswerteeinheit 34 elektrisch gekoppelt. Entsprechendes kann für die zweiten Enden 20 der Sensorleitungen 6a, 6b, 6c gelten. So ist jede der Sensorleitungen 6a, 6b, 6c mit dem jeweils zugehörigen zweiten Ende 20 direkt oder indirekt mit der Auswerteeinheit 34 elektrisch gekoppelt. Die elektrische Kopplung der Sensorleitungen 6a, 6b, 6c dient zur Erfassung der elektrischen Leitfähigkeit und der Durchgängigkeit jeder der Sensorleitungen 6a, 6b, 6c. Denn die Auswerteeinheit 34 ausgebildet ist, die elektrische Leitfähigkeit und/oder Durchgängigkeit jeder der Sensorleitungen 6a, 6b, 6c zu erfassen. Die Auswerteeinheit kann beispielsweise dazu ausgebildet sein, um den elektrischen Widerstand jeder Sensorleitung 6a, 6b, 6c zu erfassen und/oder zu überwachen. Ist eine Sensorleitung 6a, 6b, 6c nicht unterbrochen sondern durchgängig, so wird der elektrische Widerstand der Sensorleitung 6a, 6b, 6c gering bzw. die elektrische Leitfähigkeit hoch sein. Ist die Sensorleitung 6a, 6b, 6c jedoch unterbrochen, insbesondere durch die Abnutzung und/oder Beschädigung der Schlauchwand an der Mantelinnenseite 12, so wird die jeweilige Sensorleitung 6a, 6b, 6c einen sehr hohen elektrischen Widerstand repräsentieren und/oder haben.

Die Auswerteeinheit 34 kann durch die Ermittlung und/oder Überwachung des Widerstands einer jeweiligen Sensorleitung 6a, 6b, 6c also ermitteln, ob die Sensorleitung 6a, 6b, 6c elektrisch leitfähig und/oder durchgängig ist.

Um eine einfache Erfassung der elektrischen Leitfähigkeit und der Durchgängigkeit jeder der Sensorleitungen 6a, 6b, 6c zu ermöglichen, ist es von Vorteil, wenn die Sensorleitungen 6a, 6b, 6c an einer zentralen und/oder vorbestimmten Stelle des Schlauchs 2 mit der Auswerteeinheit 34 gekoppelt werden können.

Für den Schlauch 2 ist es deshalb bevorzugt vorgesehen, dass das zweite Ende 20 jeder Sensorleitung 6a, 6b, 6c mit dem Festigkeitsträger 10 elektrisch gekoppelt ist. Diese Kopplung kann direkt zwischen dem zweiten Ende 20 der jeweiligen Sensorleitung 6a, 6b, 6c und dem Festigkeitsträger 10 erfolgen. Es ist jedoch auch möglich, dass das zweite Ende 20 jeder Sensorleitung 6a, 6b, 6c über eine zugehörige Verbindungsleitung mit dem Festigkeitsträger 10 elektrisch gekoppelt ist. Wie aus der Figur 9 beispielhaft zu entnehmen ist, erstreckt sich der Festigkeitsträger 10 vorzugsweise spiralförmig durch das Basismaterial 8 der Schlauchwand 4. Dabei ist es jedoch bevorzugt vorgesehen, dass der Festigkeitsträger 10 radial außenseitig zu den Sensorleitungen 6a, 6b, 6c angeordnet ist. Dennoch ist der Festigkeitsträger 10 auch im zweiten Endabschnitt 24 der Schlauchwand 4 angeordnet, so dass eine sehr kurze Verbindung zwischen dem zweiten Ende 20 jeder Sensorleitung 6a, 6b, 6c und dem Festigkeitsträger 10 einfach herstellbar ist. Durch die spiralförmige Ausgestaltung ist der Festigkeitsträger 10 jedoch auch am ersten Endabschnitt 22 der Schlauchwand 4 und auch in jedem Abschnitt der Schlauchwand zwischen dem ersten und zweiten Ende 22, 24 der Schlauchwand 4 angeordnet. Deshalb ist es möglich, dass das erste Ende 18 jeder Sensorleitung 6a, 6b, 6c mit der im ersten Endabschnitt 22 der Schlauchwand 4 angeordneten Auswerteeinheit 34 gekoppelt ist, während das zweite Ende 20 jeder Sensorleitung 6a, 6b, 6c über den Festigkeitsträger 10 mit der gleichen Auswerteeinheit 34 elektrisch gekoppelt ist. Dazu kann eine weitere elektrische Verbindung zwischen dem Festigkeitsträger 10 und der Auswerteeinheit 34 sowie weitere Verbindungen zwischen dem ersten Ende 18 jeder Sensorleitung 6a, 6b, 6c und der Auswerteeinheit 34 vorgesehen sein. Der Festigkeitsträger 10 kann also eine gemeinsame Rückleitung für die Sensorleitungen 6a, 6b, 6c bilden.

Außerdem ist die Auswerteeinheit 34 ausgebildet ist, eine Umfangsposition und Radialrichtungsposition einer Abnutzungsstelle an der Innenseite 12 der Schlauchwand 4 basierend auf der erfassten elektrischen Leitfähigkeit und/oder Durchgängigkeit der Sensorleitungen 6 zu ermitteln. Hierzu sind von der Auswerteeinheit 34 für jede Sensorleitung 6a, 6b, 6c eine Position in Umfangsrichtung U und eine Position in Radialrichtung R durch Positionsdaten gespeichert. Die Auswerteeinheit 34 verwendet diese Positionsdaten in Kombination mit der ermittelten elektrischen Leitfähigkeit und/oder Durchgängigkeit der Sensorleitungen 6a, 6b, 6c, um zunächst festzustellen, an welcher Position in Umfangsrichtung und Radialrichtung abgenutzte Sensorleitungen 6a, 6b, 6c sind. Diese abgenutzten Sensorleitungen geben an, wo die Abnutzung an der Mantelinnenseite 12 der Schlauchwand 4 aufgetreten ist. Hier ist die sogenannte Abnutzungsstelle verortet. Die Auswerteeinheit 34 ist also dazu ausgebildet, die Umfangsposition und die Radialrichtungsposition einer Abnutzungsstelle basierend auf der erfassten elektrischen Leitfähigkeit und/oder Durchgängigkeit der Sensorleitungen 6a, 6b, 6c sowie zusätzlich basierend auf den Positionsdaten zu ermitteln.

Die Positionsdaten können beispielsweise eine Position in Umfangsrichtung U und eine Position in Radialrichtung R für jede Sensorleitung6a, 6b, 6c, insbesondere für jede erste Sensorleitung 6a, für jede zweite Sensorleitung 6b und jede dritte Sensorleitung 6c, individuell je Sensorleitung 6a, 6b, 6c repräsentieren. So kann beispielsweise für eine der ersten Sensorleitungen 6a die Position in Umfangsrichtung U durch einen Winkel von 90° und die Position in Radialrichtung R durch den Wert 2 mm gespeichert sein. Für eine weitere erste Sensorleitung 6a können die beiden genannten Positionen durch 180° und 2 mm repräsentiert sein. Für jede der Sensorleitungen 6a, 6b, 6c kann also eine unterschiedliche Kombination der Position in Umfangsrichtung U und Position in Radialrichtung R von den Positionsdaten repräsentiert sein. Die Positionsdaten können von der Auswerteeinheit gespeichert sein.

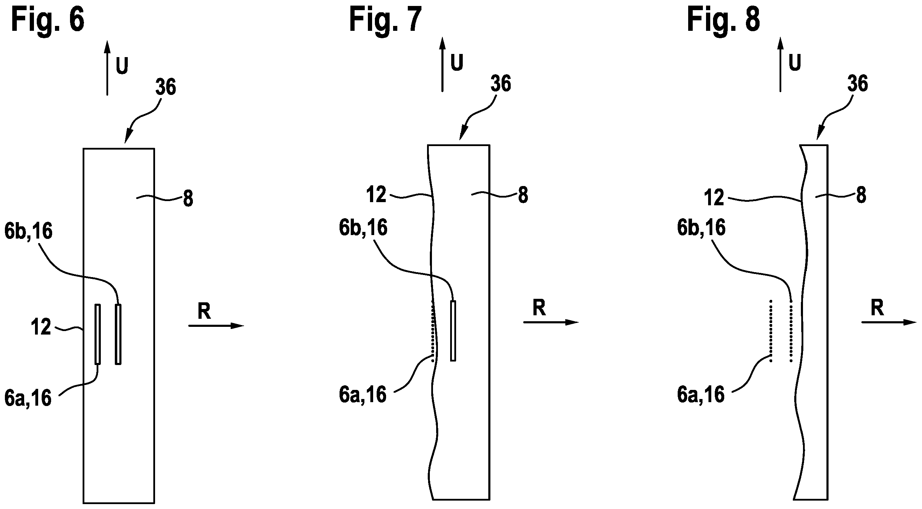

Wird durch Reibung eine der Sensorleitungen 6a, 6b, 6c zumindest abschnittsweise zerstört, so folgt daraus, dass die elektrische Leitfähigkeit und/oder Durchgängigkeit dieser Sensorleitung 6a, 6b, 6c aufgehoben ist. Rein beispielhaft soll dies anhand der Fig. 6, 7 und 8 erläutert werden.

In den Figuren 6, 7 und 8 ist jeweils ein Ausschnitt 36 der Schlauchwand 4 im Querschnitt schematisch dargestellt. Die Mantelinnenseite 12 der Schlauchwand 4 ist jeweils an der linken Seite des Ausschnitts 36 ausgebildet. Hier strömt die Flüssigkeit mit dem eingemischten Feststoff oder den eingemischten Festkörpern vorbei, was zu einem Abrieb des Basismaterials 8 an der Mantelinnenseite 12 führt.

In der Figur 6 ist ein Fall dargestellt, bei dem eine erste Sensorleitung 6a in einem ersten radialen Abstand zur Mantelinnenseite 12 und eine zweite Sensorleitung 6b in einem zweiten radialen Abstand zur Mantelinnenseite 12 angeordnet sind, wobei der zweite radiale Abstand größer als der erste radiale Abstand ist. Die beiden Sensorleitungen 6a, 6b sind nämlich in unterschiedlichen, ringförmigen Schichtabschnitten 40, 42 angeordnet. Findet ein Strömen der Flüssigkeit an der Mantelinnenseite 12 statt, wird das Basismaterial 8 kontinuierlich abgerieben.

In der Figur 7 ist der Fall dargestellt, bei dem das Basismaterial 8 soweit abgerieben wurde, dass auch die erste Sensorleitung 6a zumindest abschnittsweise durch Reibung zerstört ist. Die erste Sensorleitung 6a ist deshalb nur gepunktet angedeutet. Die Sensorleitung 6a weist deshalb zumindest im Wesentlichen keine elektrische Leitfähigkeit und keine Durchgängigkeit mehr auf. Dies kann von der Auswerteeinheit 34 erfasst werden. Außerdem kann von der Auswerteeinheit 34 mittels der Positionsdaten die Position in Umfangsrichtung U und Radialrichtung R dieser ersten Sensorleitung 6a ermittelt werden.

Ein Schlauch 2 bzw. die zugehörige Schlauchwand 4 kann derart ausgestaltet sein, dass eine gewisse Abreibung an der Mantelinnenseite 12 der Schlauchwand 4 zulässig und/oder akzeptabel ist. Deshalb ist es von Vorteil, wenn mehrere Sensorleitungen 6a, 6b in Radialrichtung R übereinander angeordnet sind, um den Abnutzungsgrad der Abnutzung und/oder Beschädigung an der Mantelinnenseite 12 erfassen zu können.

Wird ein Schlauch 2 mit einer Schlauchwand 4 weiter verwendet, um Flüssigkeit mit eingemischtem Feststoff oder mit eingemischten Festkörpern zu fördern, so kann der weitere Abrieb an der Mantelinnenseite 12 dazu führen, dass auch die zweite Sensorleitung 6b durch Abrieb zumindest abschnittweise zerstört wird. Dies ist beispielhaft und schematisch in Figur 8 für einen Ausschnitt 36 der Schlauchwand 4 dargestellt. Hierbei ist die abschnittsweise Zerstörung der zweiten Sensorleitung 6b gepunktet angedeutet. Die zweite Sensorleitung 6b ist durch den Abrieb nicht mehr durchgängig bzw. weist zumindest im Wesentlichen keine elektrische Leitfähigkeit mehr auf. Dies kann ebenfalls von der Auswerteeinheit 34 erfasst werden. Außerdem kann von der Auswerteeinheit 34 mittels der Positionsdaten die Position in Umfangsrichtung U und Radialrichtung R dieser zweiten Sensorleitung 6b ermittelt werden.

Auch wenn in den Figuren 6, 7 und 8 keine dritte Sensorleitung 6c dargestellt ist, gelten die vorangegangenen Erläuterungen in analoger weise für eine dritte Sensorleitung 6c.

Welche der Sensorleitungen 6a, 6b, 6c von der Reibung zumindest teilweise zerstört wird kann also von der Auswerteeinheit 34 durch die Erfassung der elektrischen Leitfähigkeit und/oder Durchgängigkeit ermittelt werden. In welcher Position in Umfangsrichtung und Radialrichtung die jeweils zerstörte Sensorleitung 6a, 6b, 6c angeordnet ist, kann die Sensorleitung mittels der Positionsdaten ermitteln. Damit kann die Auswerteeinheit 34 die jeweilige Sensorleitung 6a, 6b, 6c eindeutig identifizieren.

Basierend auf den Positionsdaten bzw. aus den daraus ermittelten Positionen in Umfangs- und Radialrichtung U, R kann die Auswerteeinheit 34 deshalb die Umfangsposition und Radialrichtungsposition der Abnutzungsstelle an der Innenseite 12 der Schlauchwand 4 ermitteln. Im einfachsten Fall entspricht die Umfangsposition und Radialrichtungsposition der Abnutzungsstelle der Position in Umfangsrichtung U bzw. der Position in Radialrichtung R für die zuvor erfasste Sensorleitung 6a, 6b, 6c, deren elektrische Leitfähigkeit und/oder Durchgängigkeit zerstört wurde. Die Auswerteeinheit 34 wird die Umfangsposition und Radialrichtungsposition der jeweiligen Abnutzungsstelle an der Innenseite der Schlauchwand also basierend auf den (bekannten) Positionsdaten und basierend auf der erfassten elektrischen Leitfähigkeit und/oder Durchgängigkeit der Sensorleitungen 6a, 6b, 6c ermitteln.

Als vorteilhaft hat es sich herausgestellt, wenn sich jede Sensorleitung 6a, 6b, 6c in einer oder um eine Erstreckungsachse E erstreckt, die parallel und beabstandet zu einer zentralen Längsachse L des Schlauchs 2 ist. Denn in diesem Fall kann eine für eine zerstörte Sensorleitung 6a, 6b, 6c ermittelte Position in Umfangs- und Radialrichtung U, R für dies gesamte Länge der Schlauchwand 4 gelten.

Der Schlauch 2 weist einen zu beiden Enden offenen Innenraum 38 auf. Durch diesen Innenraum wird bei Verwendung des Schlauchs 2 die Flüssigkeit gefördert. Der Innenraum 38 ist deshalb mantelseitig durch die Schlauchwand 4 geschlossen ausgebildet. Da die Längsachse L als die zentrale Längsachse L des Schlauchs 2 bezeichnet ist, liegt die Längsachse L in dem Innenraum 38. Die Erstreckungsachse E für die jeweilige Sensorleitung 6a, 6b, 6c ist deshalb in Radialrichtung R von der zentralen Längsachse L beabstandet. Außerdem ist es bevorzugt vorgesehen, dass die Erstreckungsachse E parallel zu der Längsachse L ist. Denn dadurch kann gewährleistet werden, dass eine Abnutzung und/oder Beschädigung an der Mantelinnenseite 12 der Schlauchwand 4 zumindest im Wesentlichen über die gesamte Länge der Schlauchwand 4 erfassbar ist.

Die Auswerteeinheit 34 ist vorzugsweise dazu ausgebildet, ein Auswertesignal zu erzeugen, das die Umfangsposition und Radialrichtungsposition der ermittelten Abnutzungsstelle repräsentiert. Die Auswerteeinheit 34 kann außerdem dazu ausgebildet sein, das Auswertesignal drahtlos und/oder leitungsgebunden zu übertragen, insbesondere zu senden. Wenn eine drahtlose Übertragung bzw. ein drahtloses Senden vorgesehen sein soll, kann die Auswerteeinheit dazu ausgebildet sein, eine Funkeinheit, insbesondere eine integral ausgebildete Funkeinheit, zum Übertragen und/oder Senden des Auswertesignals aufzuweisen.

Außerdem ist es bevorzugt vorgesehen, dass das Basismaterial 8 elektrisch isolierend ist oder eine um einen Faktor 1.000 geringere elektrische Leitfähigkeit als jede der Sensorleitungen 6a, 6b, 6c aufweist. Die Sensorleitungen 6a, 6b, 6c weisen bis auf ihre Enden 18, 20 oder bis auf das zweite Ende 20 jeder Sensorleitung 6a, 6b, 6c keinen mechanischen Kontakt zueinander auf. Vielmehr ist es bevorzugt vorgesehen, dass zwischen benachbarten Sensorleitungen 6a, 6b, bzw. 6a, 6c bzw. 6b, 6c Basismaterial 8 angeordnet ist, um einen unmittelbaren mechanischen Kontakt zwischen den Sensorleitungen 6 zu verhindern. Dadurch kann eine besonders gute Auflösung der Erfassung der Abnutzung und/oder Beschädigung an der Mantelinnenseite 12 in Radialrichtung R ermöglicht werden.

### Bezugszeichenliste

- A: Längsrichtung
- B: Breite des Netzstreifens
- C: Länge des Netzstreifens
- D: Höhe des Netzstreifens
- E: Erstreckungsachse
- L: Längsachse
- R: Radialrichtung
- W: Wicklungsdurchmesser
- U: Umfangsrichtung der Schlauchwand
- Z: Wandstärke der Schauchwand
- 2: Schlauch
- 4: Schlauchwand
- 6: Sensorleitung
- 6a: erste Sensorleitung
- 6b: zweite Sensorleitung
- 6c: dritte Sensorleitung
- 8: Basismaterial
- 10: Festigkeitsträger
- 12: Mantelinnenseite
- 14: Metalldraht
- 16: Netzstreifen
- 18: erstes Ende einer Sensorleitung
- 20: zweites Ende einer Sensorleitung
- 22: erster Endabschnitt der Schlauchwand
- 24: zweiter Endabschnitt der Schlauchwand
- 26: Leitungsabschnitt
- 32: erstes Schlauchkopplungsstück
- 33: zweites Schlauchkopplungsstück
- 34: Auswerteeinheit
- 36: Ausschnitt der Schlauchwand
- 38: Innenraum
- 40: erster Schichtabschnitt
- 42: zweiter Schichtabschnitt
- 44: dritter Schichtabschnitt

## Patentansprüche

1. Schlauch (2), aufweisend
eine rohrförmige Schlauchwand (4),
mehrere erste Sensorleitungen (6a),
mehrere zweite Sensorleitungen (6b), und
eine Auswerteeinheit (34),
wobei die Schlauchwand (4) ein elastomeres Basismaterial (8) mit einem eingebetteten Festigkeitsträger (10) aufweist,
wobei die ersten und zweiten Sensorleitungen (6a, 6b) in das Basismaterial (8) eingebettet sind,
wobei die ersten Sensorleitungen (6a) in einem ringförmigen, ersten Schichtabschnitt (40) der Schlauchwand (4) verteilt angeordnet sind, der die Innenseite der Schlauchwand (4) bildet,
wobei die zweiten Sensorleitungen (6b) in einem ringförmigen, zweiten Schichtabschnitt (42) der Schlauchwand verteilt angeordnet sind, der radial außenseitig zu dem ersten Schichtabschnitt (40) ausgebildet ist,
wobei jede der Sensorleitungen (6a, 6b) mit einem zugehörigen ersten Ende (18) direkt oder indirekt mit der Auswerteeinheit (34) elektrisch gekoppelt ist,
wobei jede der Sensorleitungen (6a, 6b) mit einem zugehörigen zweiten Ende (20) direkt oder indirekt mit der Auswerteeinheit (34) elektrisch gekoppelt ist,
wobei die Auswerteeinheit (34) ausgebildet ist, die elektrische Leitfähigkeit und/oder Durchgängigkeit jeder der Sensorleitungen (6a, 6b) zu erfassen,
wobei die Auswerteeinheit (34) ausgebildet ist, eine Umfangsposition und Radialrichtungsposition einer Abnutzungsstelle an der Innenseite der Schlauchwand (4) basierend auf der erfassten elektrischen Leitfähigkeit und/oder Durchgängigkeit der Sensorleitungen (6a, 6b) zu ermitteln,
**dadurch gekennzeichnet, dass**
der Festigkeitsträger (10) elektrisch leitfähig ausgebildet ist und die Rückleitung bildet.

2. Schlauch (2) nach dem vorhergehenden Anspruch, **dadurch gekennzeichnet, dass** jede der Sensorleitungen (6a, 6b) mit dem zugehörigen zweite Ende (20) mit einer Rückleitung elektrisch gekoppelt ist, die elektrisch leitfähig und mit der Auswerteeinheit (34) elektrisch gekoppelt ist, so dass jede der Sensorleitungen (6a, 6b) mit dem zugehörigen zweiten Ende (20) indirekt über die Rückleitung mit der Auswerteeinheit (34) elektrisch gekoppelt ist.

3. Schlauch (2) nach einem der vorhergehenden Ansprüche, **dadurch gekennzeichnet, dass** sich jede Sensorleitung (6a, 6b) von einem ersten Endabschnitt der Schlauchwand (22) zu einem zweiten Endabschnitt der Schlauchwand (24) erstreckt.

4. Schlauch (2) nach einem der vorhergehenden Ansprüche, **dadurch gekennzeichnet, dass** sich jede Sensorleitung (6) in einer oder um eine zugehörige Erstreckungsachse erstreckt, die parallel und beabstandet zu einer zentralen Längsachse des Schlauchs (2) ist.

5. Schlauch (2) nach einem der vorhergehenden Ansprüche, **dadurch gekennzeichnet, dass** die ersten Sensorleitungen (6a) nach einem ersten, vorbestimmten Muster in Umfangsrichtung U im ersten Schichtabschnitt (40) verteilt angeordnet sind.

6. Schlauch (2) nach einem der vorhergehenden Ansprüche, **dadurch gekennzeichnet, dass** die zweiten Sensorleitungen (6b) nach einem zweiten, vorbestimmten Muster in Umfangsrichtung U im zweiten Schichtabschnitt (42) verteilt angeordnet sind.

7. Schlauch (2) nach einem der vorhergehenden Ansprüche, **dadurch gekennzeichnet, dass** für jede erste Sensorleitung (6a) eine der zweiten Sensorleitungen (6b) vorgesehen ist, so dass die jeweilige zweite Sensorleitung (6b) in Radialrichtung R fluchtend zur jeweiligen ersten Sensorleitung (6a) angeordnet ist.

8. Schlauch (2) nach einem der vorhergehenden Ansprüche, **dadurch gekennzeichnet, dass** von der Auswerteinheit (34) für jede Sensorleitung (6a, 6b) eine Position in Umfangsrichtung U und eine Position in Radialrichtung R durch Positionsdaten gespeichert sind, und wobei die Auswerteeinheit (34) ausgebildet ist, die Umfangsposition und Radialrichtungsposition einer Abnutzungsstelle außerdem basierend auf den Positionsdaten zu ermitteln.

9. Schlauch (2) nach einem der vorhergehenden Ansprüche, **dadurch gekennzeichnet, dass** jede Sensorleitung (6a, 6b) jeweils von einem helixförmig gewickelten Metalldraht (14) oder von einem metallischen Netzstreifen (16) gebildet ist.

10. Schlauch (2) nach einem der vorhergehenden Ansprüche 7 bis 8, **dadurch gekennzeichnet, dass** die Auswerteeinheit (34) ausgebildet ist, ein Auswertesignal zu erzeugen, das die Umfangsposition und die Radialrichtungsposition der ermittelten Abnutzungsstelle repräsentiert.

11. Schlauch (2) nach einem der vorhergehenden Ansprüche 7 bis 8, **dadurch gekennzeichnet, dass** die Auswerteeinheit (34) ausgebildet ist, ein Fehlersignal zu erzeugen, wenn die Positionen in Umfangs- und Radialrichtung der erfassten Sensorleitungen mit fehlender elektrischer Leitfähigkeit und/oder Durchgängigkeit logisch nicht möglich sind.

12. Schlauch (2) nach einem der vorhergehenden Ansprüche 10 bis 11, **dadurch gekennzeichnet, dass** die Auswerteeinheit (34) eine Funkeinheit zur schnurlosen Übertragung des Auswertesignals und/oder Fehlersignals aufweist, und/oder wobei die Auswerteeinheit (34) eine Signalübertragungseinheit zur leitungsgebundenen Übertragung des Auswertesignals und/oder Fehlersignals aufweist.

13. Schlauch (2) nach einem der vorhergehenden Ansprüche, **dadurch gekennzeichnet, dass** die Auswerteeinheit (34) teilweise oder vollständig in das Basismaterial (8) der Schlauchwand (4) eingebettet ist.

## Claims

1. Hose (2), comprising
a tubular hose wall (4),
a plurality of first sensor lines (6a),
a plurality of second sensor lines (6b) and
an evaluation unit (34),
wherein the hose wall (4) comprises an elastomer base material (8) with an embedded strengthening member (10),
wherein the first and second sensor lines (6a, 6b) are embedded into the base material (8),
wherein the first sensor lines (6a) are arranged distributed in an annular, first layer section (40) of the hose wall (4), which first layer section forms the inner side of the hose wall (4),
wherein the second sensor lines (6b) are arranged distributed in an annular, second layer section (42) of the hose wall, which second layer section is formed radially on the outside with respect to the first layer section (40),
wherein each of the sensor lines (6a, 6b) is electrically coupled by means of an associated first end (18) directly or indirectly to the evaluation unit (34),
wherein each of the sensor lines (6a, 6b) is electrically coupled by means of an associated second end (20) directly or indirectly to the evaluation unit (34), wherein the evaluation unit (34) is designed to detect the electrical conductivity and/or throughflow capability of each of the sensor lines (6a, 6b),
wherein the evaluation unit (34) is designed to determine a circumferential position and radial direction position of a point of wear on the inner side of the hose wall (4) on the basis of the detected electrical conductivity and/or throughflow capability of the sensor lines (6a, 6b),
**characterized in that**
the strengthening member (10) is of electrically conductive design and forms the return line.

2. Hose (2) according to the preceding claim, **characterized in that** each of the sensor lines (6a, 6b) is electrically coupled by means of the associated second end (20) to a return line which is electrically conductive and is electrically coupled to the evaluation unit (34), so that each of the sensor lines (6a, 6b) is electrically coupled by means of the associated second end (20) indirectly via the return line to the evaluation unit (34).

3. Hose (2) according to either of the preceding claims, **characterized in that** each sensor line (6a, 6b) extends from a first end section of the hose wall (22) to a second end section of the hose wall (24).

4. Hose (2) according to any of the preceding claims, **characterized in that** each sensor line (6) extends in an or around an associated axis of extent, which is parallel to and at a distance from a central longitudinal axis of the hose (2).

5. Hose (2) according to any of the preceding claims, **characterized in that** the first sensor lines (6a) are arranged distributed in the circumferential direction U in the first layer section (40) in accordance with a first, predetermined pattern.

6. Hose (2) according to any of the preceding claims, **characterized in that** the second sensor lines (6b) are arranged distributed in the circumferential direction U in the second layer section (42) in accordance with a second, predetermined pattern.

7. Hose (2) according to any of the preceding claims, **characterized in that** one of the second sensor lines (6b) is provided for each first sensor line (6a), so that the respective second sensor line (6b) is arranged in alignment with the respective first sensor line (6a) in the radial direction R.

8. Hose (2) according to any of the preceding claims, **characterized in that** a position in the circumferential direction U and a position in the radial direction R are stored using position data by the evaluation unit (34) for each sensor line (6a, 6b), and wherein the evaluation unit (34) is designed to determine the circumferential position and radial direction position of a point of wear on the basis of the position data too.

9. Hose (2) according to any of the preceding claims, **characterized in that** each sensor line (6a, 6b) is formed in each case by a helically coiled metal wire (14) or by a metal mesh strip (16).

10. Hose (2) according to either of the preceding Claims 7 and 8, **characterized in that** the evaluation unit (34) is designed to generate an evaluation signal, which represents the circumferential position and the radial direction position of the determined point of wear.

11. Hose (2) according to either of the preceding Claims 7 and 8, **characterized in that** the evaluation unit (34) is designed to generate a fault signal when the positions in the circumferential and radial direction of the detected sensor lines with zero electrical conductivity and/or throughflow capability are logically impossible.

12. Hose (2) according to either of the preceding Claims 10 and 11, **characterized in that** the evaluation unit (34) has a radio unit for wireless transmission of the evaluation signal and/or fault signal, and/or wherein the evaluation unit (34) has a signal transmission unit for wired transmission of the evaluation signal and/or fault signal.

13. Hose (2) according to any of the preceding claims, **characterized in that** the evaluation unit (34) is partially or fully embedded into the base material (8) of the hose wall (4).

## Revendications

1. Tuyau (2), comprenant
une paroi de tuyau (4) tubulaire,
plusieurs premières lignes de capteur (6a),
plusieurs deuxièmes lignes de capteur (6b) et
une unité d'évaluation (34),
la paroi de tuyau (4) possédant un matériau de base élastomère (8) avec un renforcement (10) incorporé,
les première et deuxième lignes de capteur (6a, 6b) étant incorporées dans le matériau de base (8),
les premières lignes de capteur (6a) étant disposées réparties dans une première portion de couche (40) annulaire de la paroi de tuyau (4), qui forme le côté intérieur de la paroi de tuyau (4),
les deuxièmes lignes de capteur (6b) étant disposées réparties dans une deuxième portion de couche (42) annulaire de la paroi de tuyau, qui est formée radialement du côté extérieur par rapport à la première portion de couche (40), chacune des lignes de capteur (6a, 6b) étant couplée électriquement directement ou indirectement à l'unité d'évaluation (34) par une première extrémité (18) associée,
chacune des lignes de capteur (6a, 6b) étant couplée électriquement directement ou indirectement à l'unité d'évaluation (34) par une deuxième extrémité (20) associée,
l'unité d'évaluation (34) étant configurée pour acquérir la conductivité électrique et/ou la continuité de chacune des lignes de capteurs (6a, 6b),
l'unité d'évaluation (34) étant configurée pour déterminer une position périphérique et une position de direction radiale d'un point d'usure sur le côté intérieur de la paroi de tuyau (4) sur la base de la conductivité électrique et/ou de la continuité acquise des lignes de capteur (6a, 6b),
**caractérisé en ce que**
le renforcement (10) est réalisé électriquement conducteur et forme la ligne de retour.

2. Tuyau (2) selon la revendication précédente, **caractérisé en ce que** chacune des lignes de capteur (6a, 6b) est couplée électriquement à la deuxième extrémité (20) correspondante par une ligne de retour qui est électriquement conductrice et couplée électriquement à l'unité d'évaluation (34), de sorte que chacune des lignes de capteur (6a, 6b) est couplée électriquement à l'unité d'évaluation (34) par la deuxième extrémité (20) correspondante indirectement par le biais de la ligne de retour.

3. Tuyau (2) selon l'une des revendications précédentes, **caractérisé en ce que** chaque ligne de capteur (6a, 6b) s'étend d'une première portion d'extrémité de la paroi de tuyau (22) à une deuxième portion d'extrémité de la paroi de tuyau (24).

4. Tuyau (2) selon l'une des revendications précédentes, **caractérisé en ce que** chaque ligne de capteur (6) s'étend dans ou autour d'un axe d'extension associé, lequel est parallèle à un axe longitudinal central du tuyau (2) et espacé de celui-ci.

5. Tuyau (2) selon l'une des revendications précédentes, **caractérisé en ce que** les premières lignes de capteur (6a) sont disposées réparties selon un premier motif prédéterminé dans la direction périphérique U dans la première portion de couche (40).

6. Tuyau (2) selon l'une des revendications précédentes, **caractérisé en ce que** les deuxièmes lignes de capteur (6b) sont disposées réparties selon un deuxième motif prédéterminé dans la direction périphérique U dans la deuxième portion de couche (42).

7. Tuyau (2) selon l'une des revendications précédentes, **caractérisé en ce que** pour chaque première ligne de capteur (6a) est prévue l'une des deuxièmes lignes de capteur (6b), de sorte que la deuxième ligne de capteur (6b) respective est disposée en alignement par rapport à la première ligne de capteur (6a) respective dans la direction radiale R.

8. Tuyau (2) selon l'une des revendications précédentes, **caractérisé en ce qu'**une position dans la direction périphérique U et une position dans la direction radiale R sont mémorisées par l'unité d'évaluation (34) pour chaque ligne de capteur (6a, 6b) par des données de position, et l'unité d'évaluation (34) étant configurée pour déterminer la position périphérique et la position dans la direction radiale d'un point d'usure en plus en se basant sur les données de position.

9. Tuyau (2) selon l'une des revendications précédentes, **caractérisé en ce que** chaque ligne de capteur (6a, 6b) est formée respectivement par un fil métallique (14) enroulé en forme d'hélice ou par une tresse métallique (16).

10. Tuyau (2) selon l'une des revendications 7 à 8 précédentes, **caractérisé en ce que** l'unité d'évaluation (34) est configurée pour générer un signal d'évaluation qui représente la position périphérique et la position de direction radiale du point d'usure déterminé.

11. Tuyau (2) selon l'une des revendications 7 à 8 précédentes, **caractérisé en ce que** l'unité d'évaluation (34) est configurée pour générer un signal d'erreur lorsque les positions dans les directions périphérique et radiale des lignes de capteur détectées sont logiquement impossibles avec une absence de conductivité électrique et/ou de continuité.

12. Tuyau (2) selon l'une des revendications 10 à 11 précédentes, **caractérisé en ce que** l'unité d'évaluation (34) possède une unité radio pour la transmission sans fil du signal d'évaluation et/ou du signal d'erreur, et/ou l'unité d'évaluation (34) possédant une unité de transmission de signal destinée à la transmission filaire du signal d'évaluation et/ou du signal d'erreur.

13. Tuyau (2) selon l'une des revendications précédentes, **caractérisé en ce que** l'unité d'évaluation (34) est partiellement ou totalement incorporée dans le matériau de base (8) de la paroi de tuyau (4).
